(19) Europäisches Patentamt
European Patent Office
Office européen des brevets

(11) Publication number: 0 128 755 B1

# (12) EUROPEAN PATENT SPECIFICATION

(45) Date of publication of patent specification: 24.08.88

(51) Int. Cl.$^4$: G 10 L 5/06

(21) Application number: 84303870.4

(22) Date of filing: 07.06.84

## (54) Apparatus for speech recognition.

(30) Priority: 07.06.83 JP 102023/83

(43) Date of publication of application: 19.12.84 Bulletin 84/51

(45) Publication of the grant of the patent: 24.08.88 Bulletin 88/34

(84) Designated Contracting States: DE GB

(56) References cited:

SYSTEMS-COMPUTERS-CONTROLS, vol. 10, no. 1, January/February 1979, pages 17-26, Silver Spring, Maryland, USA; Y. NIITSU et al.: "A method of using linguistic information for automatic spoken word recognition"

IEEE TRANSACTIONS ON ELECTRONIC COMPUTERS, vol. EC-12, no. 5, December 1963, pages 835-846, New York, USA; T. SAKAI et al.: "The automatic speech recognition system for conversational sound"

PROCEEDINGS OF THE FOURTH INTERNATIONAL JOINT CONFERENCE ON PATTERN RECOGNITION, Kyoto, 7th-10th November 1978, pages 985-989, IEEE, New York, USA; SEI-ICHI NAKAGAWA et al.: "A real time spoken word recognition system in a large vocabulary with learning capability of speaker differences"

(73) Proprietor: Matsushita Electric Industrial Co., Ltd.
1006, Oaza Kadoma
Kadoma-shi Osaka-fu, 571 (JP)

(72) Inventor: Niyada, Katsuyuki
2-8-1-406 Minamidai
Sagamihara-shi Kanagawa-ken (JP)
Inventor: Inoue, Ikuo
1221-23 Kamoi-cho Midori-ku
Yokohama (JP)
Inventor: Fujii, Satoru
2-8-1-309 Minamidai
Sagamihara-shi Kanagawa-ken (JP)
Inventor: Morii, Shuji
2-11-16 Jingumae Shibuya-ku
Tokyo 150 (JP)

(74) Representative: Senior, Alan Murray et al
J.A. KEMP & CO 14 South Square Gray's Inn
London WC1R 5EU (GB)

(56) References cited:

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

(56) References cited:

ICASSP 81 (IEEE INTERNATIONAL CONFERENCE ON ACOUSTICS, SPEECH AND SIGNAL PROCESSING), Atlanta, 30th March - 1st April 1981, pages 1156-1159, IEEE, New York, USA; M. WAGNER: "Automatic labelling of continuous speech with a given phonetic transcription using dynamic programming algorithms"

IEEE TRANSACTIONS ON ACOUSTICS, SPEECH AND SIGNAL PROCESSING, vol. ASSP-27, no. 5, October 1979, pages 538-549, New York, USA; R. DE MORI et al.: "Inference of a knowledge source for the recognition of nasals in continuous speech"

IEEE TRANSACTIONS ON ACOUSTICS, SPEECH AND SIGNAL PROCESSING, vol. ASSP-23, no. 1, February 1975, pages 54-67, New York, USA; C.J. WEINSTEIN et al.: "A system for acoustic-phonetic analysis of continuous speech"

1978 IEEE INTERNATIONAL CONFERENCE ON ACOUSTICS, SPEECH & SIGNAL PROCESSING, Tulsa, 10th-12th April 1978, pages 728-730, IEEE, New York, USA; SEI-ICHI NAKAGAWA et al.: "A word recognition method from a classified phoneme string in the LITHAN speech understanding system"

**Description**

This invention relates generally to apparatus for speech recognition, and more particularly to such apparatus which recognizes speech by descriminating phonemes.

In some conventional speech recognition apparatus, a spectrum analyzing portion comprising a filter bank of 29 channels is used to convert an input speech signal into power values of consecutive frames each having a time length of 10 msec or so, so that 29-channel band power level values are obtained. Then local peaks are extracted from the band power levels by way of a local peak extracting portion so as to obtain three values P1, P2, P3 in opposite order of frequency and another three values Pe1, Pe2, Pe3 in order of power for each frame. On the other hand, a segmentation parameter extracting portion is used to extract overall frequency range power, slope of spectrum, low-frequency range and middle-frequency range moments for each frame by using the band power information. Then a segmentation portion determines vowel periods, consonant periods and semivowel periods by using time-dependent variation of parameters obtained by the segmentation parameter extracting portion. A phoneme discriminating portion discriminates phonemes by using the local peak obtained by the local peak extracting portion for respective periods determined by the segmentation portion. Such phoneme discrimination is effected by applying the position of local peak to a discriminant diagram which is prestored in a discriminant storing portion in advance. Discriminant diagrams are prepared separately for vowels, consonants and semivowels, and one of them is selected by the segmentation portion. The above-mentioned P1, P2, P3 are used for vowels and semivowels, while Pe1, Pe2, Pe3 are used for consonants.

A phoneme strings producing portion put the results of phoneme discrimination obtained by the phoneme discriminant portion for respective frames toether for respective segmentation periods, and assigns phoneme symbols to respective periods. Segmentation is effected in accordance with the continuity of the results of phoneme discrimination for respective frames when vowels continue such as /ao/, /iu/ or the like because the segmentation portion cannot perform segmentation in connection with such continued vowels. In this way, the input speech signal is converted into phoneme strings.

A word matching portion then compares the input phoneme strings obtained by the phoneme strings producing portion in this way with respective items of a word dictionary by way of matching using time warping so as to output an item of the dictionary, which is nearest to the input phoneme strings, as the result of recognition.

There are some phonemes which are difficult to be detected by using segmentation parameters extracted by the segmentation parameter extracting portion. Especially nasal sounds, "r" sound and semivowels are such phonemes. Since these phonemes have a high similarity to vowels, it is difficult to detect them by only such parameters.

The conventional technique also suffers from another drawback that the rate of phoneme recognition for respective frames is low. In the conventional arrangement, the position of local peak is used as a feature parameter, and phoneme recognition is effected by applying it to discriminant diagrams. Although such method is expected to show a high rate of discrimination in connection with vowels and some of semivowels, there is a limit on discrimination of consonants.

Systems—Computers—Controls, Volume 10, No. 1, Jan/Feb 1979, pages 17 to 26, Silver Spring, Maryland, U.S.A.; Y Niitsu et al., "A method of using linguistic information for automatic word recognition" (Document 1) and IEEE Transactions on electronic computers Volume EC-12, No. 5, December 1963, pages 835 to 846; New York, U.S.A.; T. Sakai et al.: "The automatic speech recognition system for conversational sound", (Document 2) show speech recognition systems in accordance with the precharacterising portion of claim 1.

In document 1 segmentation is performed by using the ratios of high frequency power to middle frequency power and average spectrum power to low frequency power. In document 2 segmentation for words is performed by a zero crossing wave analysis and for consonants by a logical combination of the stability speech parameters at a middle frequency and a range of frequencies. However, the fact that the ratios are used means that recognition of some consonants is difficult.

ICASSP, 1978, pages 728 to 730, Nakayama et al. discloses the use of Bayes' discriminant functions and segmentation is performed by classification of frames into four groups: voiceless-nonfricative, voiceless-nonplosive, voiced or silent.

The present invention has been developed in order to remove the above described drawbacks inherent to the conventional speech recognition apparatus. In accordance with the present invention there is provided apparatus for speech recognition, comprising:

(a) a spectrum analysing portion for obtaining parameters indicative of the spectrum of an input speech signal;

(b) a standard pattern storing portion for storing phoneme standard patterns of phonemes or phoneme groups;

(c) a similarity calculating portion for calculating the degree of similarity between the results from said spectrum analysing portion and standard patterns from said standard pattern storing portion;

(d) a segmentation portion for effecting segmentation; and

(e) a phoneme discriminating portion for recognising phonemes by using the results from said similarity calculating portion, characterised in that:

the spectrum analysis is performed by way of linear prediction analysis to obtain a set of LPC cepstrum coefficients; in that said degree of similarity is calculated by using a statistical distance measure; and in that segmentation is effected by using the results from said similarity calculating portion and the time dependent variation of power information in a low-frequency range and, independently, in high-frequency range of the input speech signal spectrum.

The present invention also provides apparatus for speech recognition, comprising:

(a) a spectrum analysis portion for obtaining spectrum information of an input speech signal;

(b) a first similarity calculating portion;

(c) a first recognition portion for effecting segmentation and recognition by using the continuity of the results from said first similarity calculation portion;

(d) a segmentation parameter extracting portion for obtaining low-frequency range over power information and high-frequency range power information of said input speech signal;

(e) a consonant segmentation portion;

(f) a second similarity calculation portion;

(g) a second recognition portion for recognising phonemes of consonants on the basis of the results from said second similarity calculation portion;

(h) a phoneme strings producing portion for producing phoneme strings by using the results from said first recognition portion and the results from said second recognition portion; and

(i) a matching portion for effecting comparison/matching between the results from said phoneme strings producing portion and dictionary items included in word dictionary so as to outut a dictionary item which shows highest similarity to said phoneme strings; characterised in that:

said spectrum information is a set of LPC cepstrum coefficients obtained by way of linear predictive analysis; in that the first similarity calculation portion obtains, by using a statistical distance measure, the degree of similarity of said input speech to phonemes of features of vowels, voiced sounds and unvoiced sounds by calculating the degree of similarity between the results from said spectrum analysing portion and standard patterns from a standard pattern storing portion; in that the consonant segmentation portion effects segmentation of phonemes of consonants by using the results from said first similarity calculation portion and time-dependent variation of said power information in low-frequency range and, independently, in a high-frequency range of the input speech signal spectrum; and in that the second similarity calculation portion calculates, by using a statistical distance measure, the degree of similarity between coefficients from said spectrum analysing portion and standard patterns of phonemes of consonants from said standard pattern storing portion for respective periods obtained by said consonant segmentation portion.

The object and features of the present invention will become more readily apparent from the following detailed description of the preferred embodiments taken in conjunction with the accompanying drawings, in which:

Fig. 1 is a block diagram showing the function of an embodiment of the speech recognition apparatus according to the present invention;

Fig. 2 is a flowchart showing the way of recognition by the apparatus of Fig. 1;

Fig. 3 is a diagram showing the way of detecting power dips from low-frequency range information or high-frequency range information;

Fig. 4 is a discriminant diagram used for determinating consonant periods and addition of consonants by using the magnitude of power dips of low-frequency range and high-frequency range;

Fig. 5 is an explanatory diagram showing the way of detecting consonant periods by recognizing all frames as vowels or nasal sounds;

Fig. 6 is a diagram for the description of segmentation of a words' beginning consonant; effected by using power information;

Fig. 7 is a diagram showing an example of a way of consonant detection by using the result of phoneme recognition;

Figs. 8 and 9 are diagrams for the description of the way of segmentation with reference to examples;

Fig. 10 is a diagram for the description of the way of recognition of vowels with reference to an example according to the present invention;

Fig. 11A is a diagram for the description of an example of detection of a semivowel /j/ according to the present invention;

Fig. 11B is a diagram for the description of an example of detection of a semivowel /w/ according to the present invention; and

Fig. 12 is a block diagram showing the function of another embodiment of the speech recognition apparatus according to the present invention;

The same or corresponding elements and parts are designated at like reference numerals throughout the drawings.

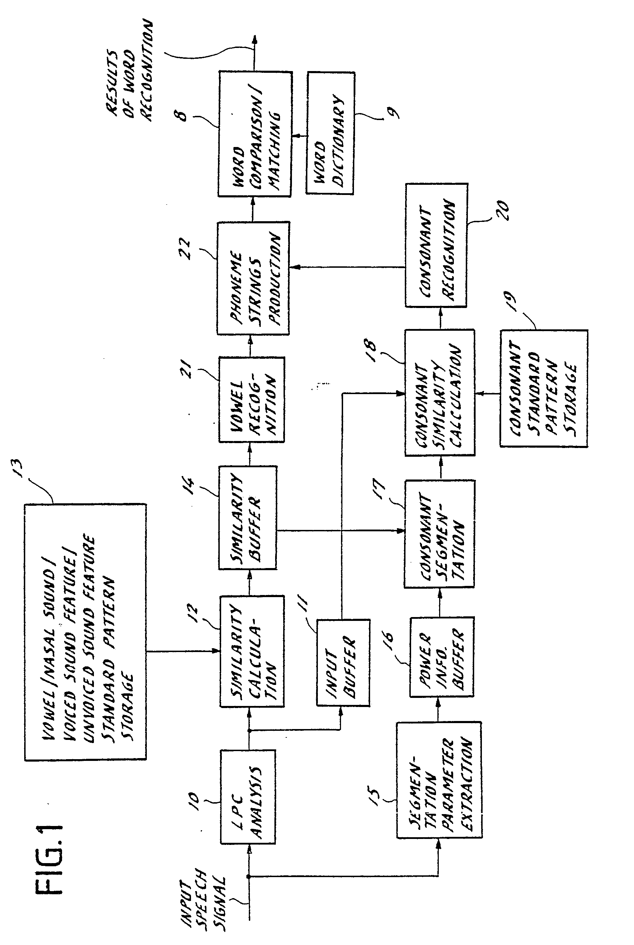

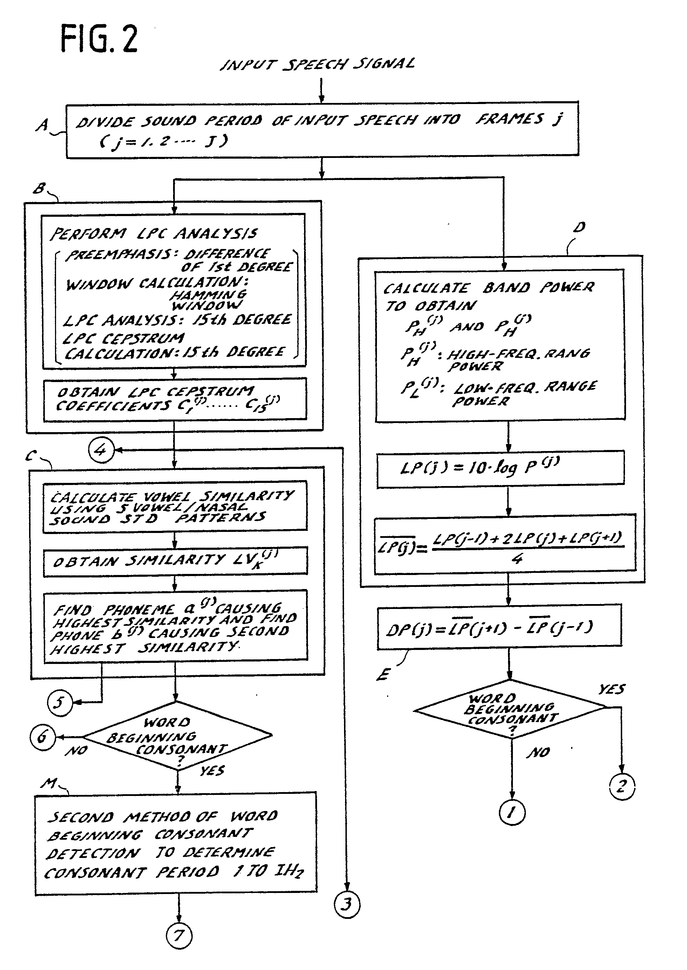

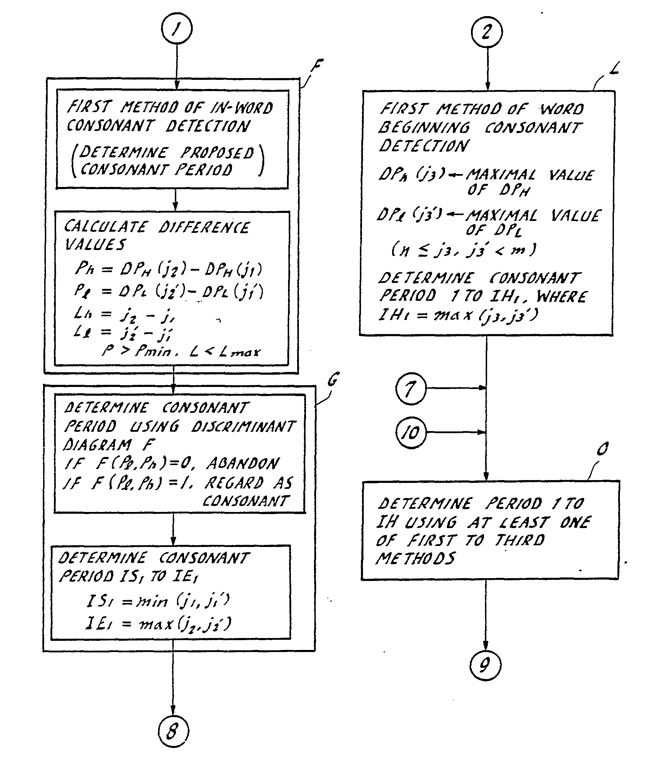

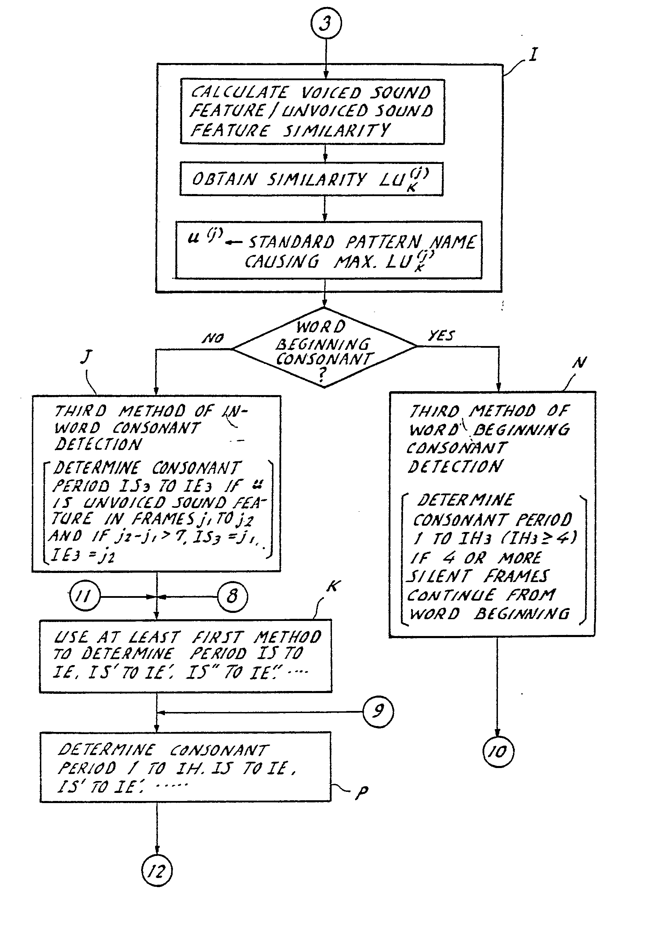

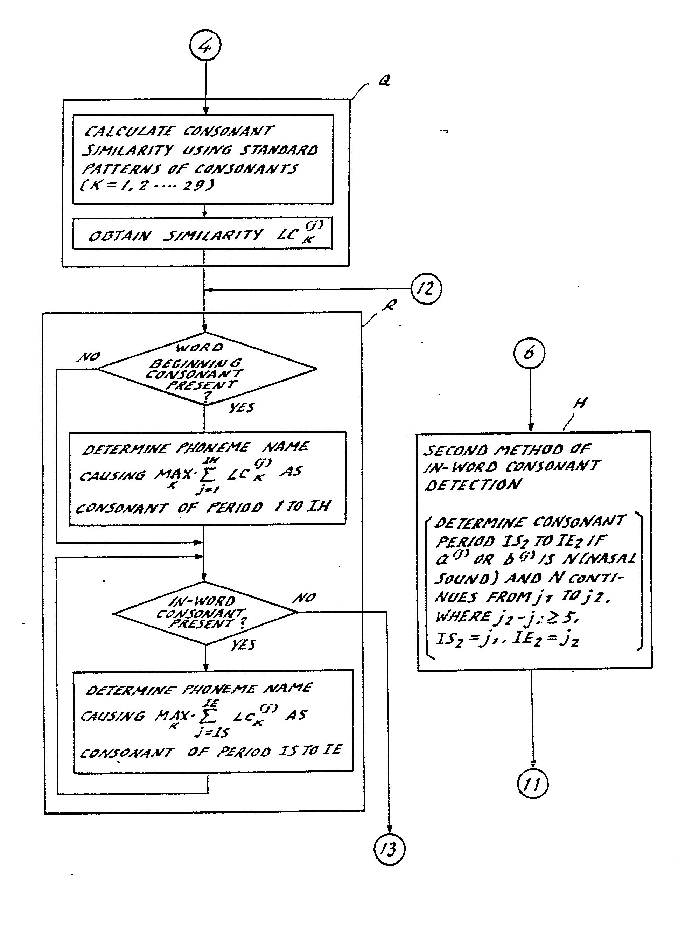

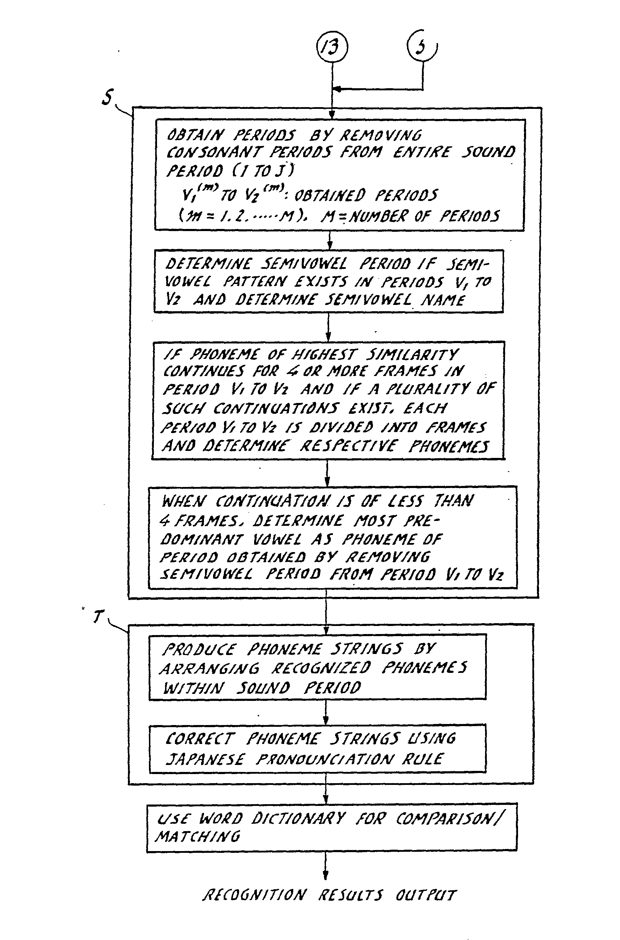

Referring to Fig. 1 of the accompanying drawings, the function of an embodiment of the speech recognition apparatus according to the present invention is shown by way of a block diagram. The speech recognition apparatus according to the present invention is realised by one or more computers which execute a program shown in the form of a flowchart in Fig. 2. Although Fig. 1 only shows blocks used for speech recognition, an input speech signal in the form of an analog signal is first A/D converted into a digital signal by way of an unshown A/D converter so that the digital signal is fed to an input stage of the arrangement of Fig. 1.

As shown in the flowchart of Fig. 2, in a first step A, a sound period of an input speech signal is divided into frames each having 10 msec, and these frames are expressed in terms of $j=1, 2, \ldots J$. Then in a step B, preemphasis (first order difference) is performed for the input speech signal, and then a Humming window of 20 msec is performed, LPC analysis being performed, linear predictive coefficients of 15th degree being obtained, and then LPC cepstrum coefficients $C_n^{(j)}$ of 15th degree is obtained wherein n=1, 2, ... 15. These operations are performed by an LPC analyzing portion 10 of Fig. 1. Such operations are described in detail in "Linear Prediction of Speech" written by J. B. Markel and A. H. Gray, Jr (Springer-Verlag). LPC cepstrum coefficients are obtained for each frame of 10 msec, and are fed to an input buffer 11 and to a similarity calculation portion 12. The similarity calculation portion 12 obtains the degree of similarity $LV_k^{(j)}$ between input parameters $C_n^{(j)}$ and respective standard patterns of five vowels and nasal sounds, which are stored in a vowel/nasal sound/voiced sound feature/unvoiced sound feature standard pattern storing portion 13, by using a statistical distance measure, and then rearrange the input parameters in order of degree of similarity as shown in a step C. Then rearranged results are fed to a similarity buffer 14 with every frame. The standard patterns have been prepared in advance by obtaining average values and covariances for respective vowels and nasal sounds (/m/, /n/, syllabic nasal in Japanese) by using a number of data.

The statistical distance measure includes Bayes' discriminant, Mahalanobis' distance, linear discriminant function and so on, and satisfactory results are obtained in substantially the same manner no matter which one of these is used.

These distance measures will be briefly and generally described. Using $\mu_k$ and $\Sigma_k$ respectively for an average vector and a covariance matrix of a phoneme k, probability density $P_k$ for the input C=(C1, C2, ... Cd) is given by the following equation.

$$P_k=\frac{1}{(2\pi)^{d/2}|\Sigma_k|^{1/2}}\cdot\exp\{-\tfrac{1}{2}(C-\mu_k)^T\Sigma_k^{-1}(C-\mu_k)\} \quad \text{Eq. (1)}$$

wherein $|\Sigma_k|$ indicates the value of a matrix, while a superscript T represents transposition. By taking logarithm of the above equation, logarithm likelihood $L_k$ is given as:

$$L_k=-\tfrac{1}{2}(C-\mu_k)^T\cdot\Sigma_k^{-1}\cdot(C-\mu_k)-A_k \quad \text{Eq. (2)}$$

wherein

$$A_k=\log\{(2\pi)^{d/2}\cdot|\Sigma_k|^{1/2}\} \quad \text{Eq. (3)}$$

On the other hand, Mahalanobis' distance is defined by the following Eq. (4):

$$M_k=(C-\mu_k)\Sigma_k^{-1}(C-\mu_k) \quad \text{Eq. (4)}$$

In the above Eq. (4), simplification may be achieved by making $\Sigma_k=\Sigma$ with $\Sigma_k$ being made common to all phonemes.

In this case, linear discriminant function for discriminating phonemes k and k' is given by:

$$D^2=M_k-M_{k'}=a^TC+b \quad \text{Eq. (5)}$$

wherein "a" is a linear discriminant coefficient vector, and "b" is a constant.

The above-mentioned vowel/nasal sound similarity calculation portion 12 calculates the degree of similarity and performs similarity comparison for each of five vowels and nasal sounds by using one of Eqs. (2), (4) and (5).

Standard patterns of voiced sound feature and unvoiced sound feature are also prestored in the vowel/nasal sounds/voiced sound feature/unvoiced sound feature standard pattern storing portion 13 so that calculation of similarity thereof is performed by the similarity calculation portion 12 in the same manner as vowels and nasal sounds. Furthermore, determination of voiced sound feature or unvoiced sound feature for an input frame is carried out, and the result of determination is fed to the similarity buffer 14.

These standard patterns are produced in advance such that average values and covariances are obtained for respective phonemes by using many word data, whose phoneme names have been determined by eye measurement for respective frames, and by applying the processing of the step B of Fig. 2 to such data, and then the produced standard patterns are stored in the vowel/nasal sound/voiced sound feature/unvoiced sound feature standard pattern storing portion 13.

On the other hand, the input speech signal is also fed to a segmentation parameter extracting portion 15 in which frequency analysis is effected by using a three-channel band pass filter having pass bands of a low-frequency range (250 to 600 Hz), a middle-frequency range (600 to 1,500 Hz), and a high-frequency range (1,500 to 4,000 Hz), and then high-frequency range power $P_H^{(j)}$ and low-frequency range power $P_L^{(j)}$ are obtained in every frame in the form of logarithm power $LP_H^{(j)}$, $LP_L^{(j)}$ by using $LP(j)=10\cdot\log P^{(j)}$. Then smoothing is effected by using:

$$\overline{LP(j)}=\frac{LP(j-1)+2LP(j)+LP(j+1)}{4}$$

for obtaining $\overline{LP_H}^{(j)}$ and $\overline{LP_L}^{(j)}$ which will be fed to a power information buffer 16.

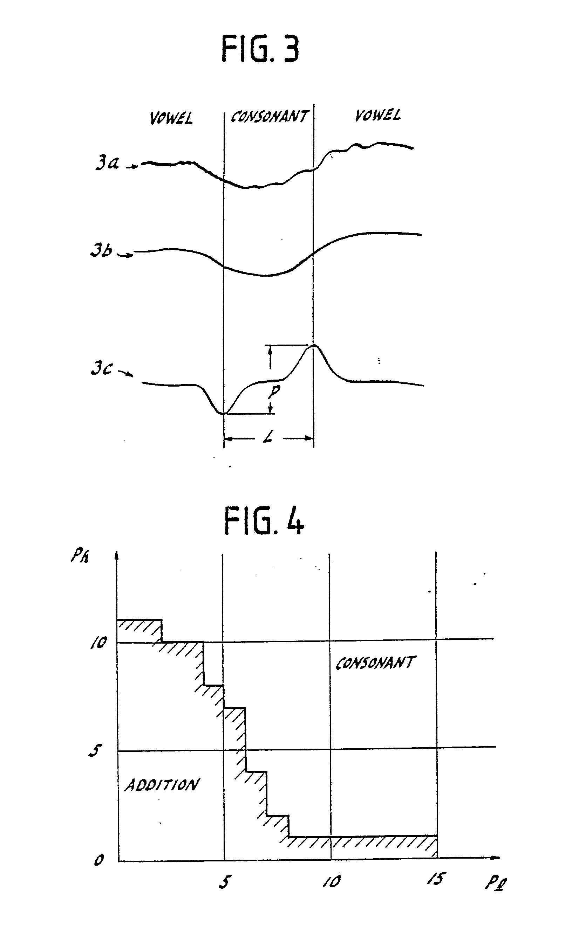

Now in-word consonant detecting function of the consonant segmentation portion 17 will be described. The above "in-word consonant" is used to mean consonants included in a word except for a word's beginning consonant positioned at the beginning of the word. Fig. 3 shows a way of extracting dips from low-frequency range power or from high-frequency range power. This operation is illustrated in steps D and E of the flowchart of Fig. 2. A curve 3a in Fig. 3 is obtained by plotting time series logarithms $LP_H$, $LP_L$ of rectified output from a filter, and it will be seen that a number of small dips exist in the curves in addition to large dips of consonant periods. Since the small dips are unnecessary, these small dips are removed by smoothing so as to obtain a curve 3b. This curve 3b is expressed by $LP_H$, $LP_L$. Then difference values are obtained as seen in the step E of Fig. 2, from the curve 3b of Fig. 3 so as to obtain a signal of curve 3c expressed in terms of $DP_H$, $DP_L$ as:

$$DP(j)=\overline{LP}(j+1)-\overline{LP}(j-1)$$

From the signal of the curve 3c, the difference between maximal values DP(j2), DP(j2′), minimal values DP(j1), DP(j1′), which difference values are expressed by

$$Ph=DPh(j2)-DPh(j1),$$

$$P_l=DP_l(j2')-DP_l(j1'),$$

and time length from the minimal value frame j1 to the maximal value frame j2, which time length is expressed in terms of the number of frames as

$$Lh=j2-j1,$$

$$L_l=j2'-j1'$$

are respectively obtained. Then conditions of $P>Pmin$, $L<Lmax$ are applied to dips to find dips satisfying the conditions, and a period L from a maximal value and a minimal value for determining dip periods (proposed consonant periods) as seen in a sep F of Fig. 2. In the above, $P_{min}$ is a threshold for removing dips of small magnitude, while $L_{max}$ is another threshold for removing an excessively long period, such as 150 msec.

This method is advantageous because dip periods can be simply detected with high accuracy by calculating maximum and minimum values of varying speed of power with the magnitude of power dips being replaced with the detection of varying speed of power.

Now there is described the way of specifying a consonant period from proposed consonant periods detected by one or both of the low-frequency range power dip and the high-frequency range power dip. When a proposed consonant period from low-frequency range information overlaps a proposed consonant period from high-frequency range information overlaps, a two-dimensional coordinate $(P_l, P_h)$ is applied to a discriminant diagram F of Fig. 4. As seen in a step G of Fig. 2, when $(P_l, P_h)$ is positioned in an addition region of a hatched area, the consonant period is abandoned. When $(P_l, P_h)$ is positioned in a consonant region, a period (IS1 to IE1) corresponding to logic OR of a low-frequency range power dip period and a high-frequency range power dip period is specified. When no overlapping occurs between the low-frequency range information and the high-frequency range information, such information is applied to the discriminant diagram with one of them being put as 0 such as $(P_l, 0)$.

The discriminant diagram is prepared such that the processings of the steps D to F of Fig. 2 are applied in sequence by using a number of words whose consonant periods have been determined by eye measurement, for obtaining the distribution of $(P_l, P_h)$ to determine regions so that power dips of consonants and other power dips (addition) are satisfactorily classified in a desired manner.

The method of determining consonant periods effected such that the low-frequency range power information and the high-frequency range power information having complimentary characteristics are used as parameters for finding proposed consonant periods by both of them, and then these information pieces are applied to the discriminant diagram, is effective for consonants of a wide range from voiced sounds to unvoiced sounds when compared to conventional methods, and the method is advantageous because consonant periods can be detected with high accuracy. Especially the method is effective for voiced consonants /b/, /d/, /ŋ/, /r/, unvoiced consonant /h/, and a consonant /z/ showing both voiced and unvoiced sound features.

However, the above-described method of effecting segmentation by using dip information results in detection rate of only 73% for nasal periods, and this detection rate is unsatisfactory when compared with other voiced consonants. Furthermore, there is a drawback that dip information cannot be used for syllabic nasal in Japanese because its duration is too long. This drawback is removed in the embodiment by a second consonant period detecting method using the continuity of frames which have been determined as nasal sounds by the above-mentioned similarity calculation portion 12. When patterns of five vowels and nasal sounds are applied to all the frames, there is a high probability that respective frames corresponding to nasal sounds (/m/, /n/ and syllabic nasal in Japanese) are recognized as nasal sounds, which are referred to as N hereinafter, while phonemes (/b/, /d/, /ŋ/, /r/) whose spectrum pattern is similar to that of nasal sounds are also recognized as N. Therefore, it is possible to detect voiced consonants even in periods where no dip exists if periods recognized as N are checked. In this embodiment, a period IS2 to IE2 is determined as a consonant period when five or more frames, which have been recognized such that a phoneme of a highest similarity or another phoneme of a second highest similarity is recognized as N, continue.

The above-described method of effecting segmentation by checking the continuity of frames, which have been recgonized as nasal sounds, is effective for /m/, /n/, syllabic nasal in Japanese, /b/, /d/, /ŋ/.

Now a third consonant period detecting method using the result of determination of voiced sound feature/unvoiced sound feature will be described. The lasting period of unvoiced consonants /s/, /c/, /h/ and /z/, whose lasting period is long, is greater than Lmax, and therefore, dips cannot be detected sometimes. In this case, segmentation can be effected by using the continuity of the results of determination of voiced sound feature and unvoiced sound feature with respect to time.

Determination of voiced sound feature and unvoiced sound feature may be effected by using one of zero crossing wave, slope of spectrum, value of self-correlation coefficient of first degree. In the embodiment of the present invention as shown in a step I of Fig. 2, LPC cepstrum coefficients $c_1$ to $c_5$ are used for calculating similarity $LU_k$, i.e. the distance between the standard patterns of voiced sound feature and unvoiced sound feature, by applying Mahalanobis' distance of Eq. (4). Then the name of a standard pattern which shows the highest similarity is written as $u^{(j)}$. Subsequently, as shown in a step J of Fig. 2, if the above "u" represents unvoiced sound feature in frames $j_1$ to $j_2$ and if seven or more unvoiced sound feature frames continue, such a period defined by frames $j_1$ to $j_2$ is subjected to segmentation as a consonant period $IS_3$ to $IE_3$.

Now, an example of application of the above-described first to third methods of consonant period detection will be described. While various combinations of the first through third consonant detection methods are possible, it is preferable to use a combination of the first consonant period detecting method using low-frequency range and high-frequency range power information, and one or both of the second consonant period detecting method using the result of phoneme recognition at every frame, and the third consonant period detecting method using the result of voiced sound feature/unvoiced sound feature determination as seen in a step K of Fig. 2.

In the embodiment, these first to third consonant period detecting methods are applied in order of the third, the first and the second.

(i) First of all, the third method, which will be referred to as <3>, is applied to a sound period, and a period, in which seven or more unvoiced feature frames continue, is determined as a consonant period.

(ii) the first method, which will be referred to as <1>, is applied to periods from which the periods of <i> have been removed, for obtaining a consonant period by using dips.

(iii) The second method, which will be referred to as <2>, is applied to a voiced sound period, and a period, in which five or more frames recognized as N continue, is determined as a consonant period.

(iv) All of the periods obtained by the above (i) to (iii) are determined as consonant periods. In the above, a period obtained by using dips is given priority in principle when a period is obtained in an overlapped manner by the above (i) and (ii) or by (ii) and (iii).

In the above embodiment, although it has been described that one or both of the second and third consonant period detecting methods is combined with the first consonant detecting method, no problem would occur in practice when only the first consonant detecting method is used.

While the above-description is directed to the way of effecting segmentation of in-word consonants, now the way of detecting consonants at the beginning of words will be described.

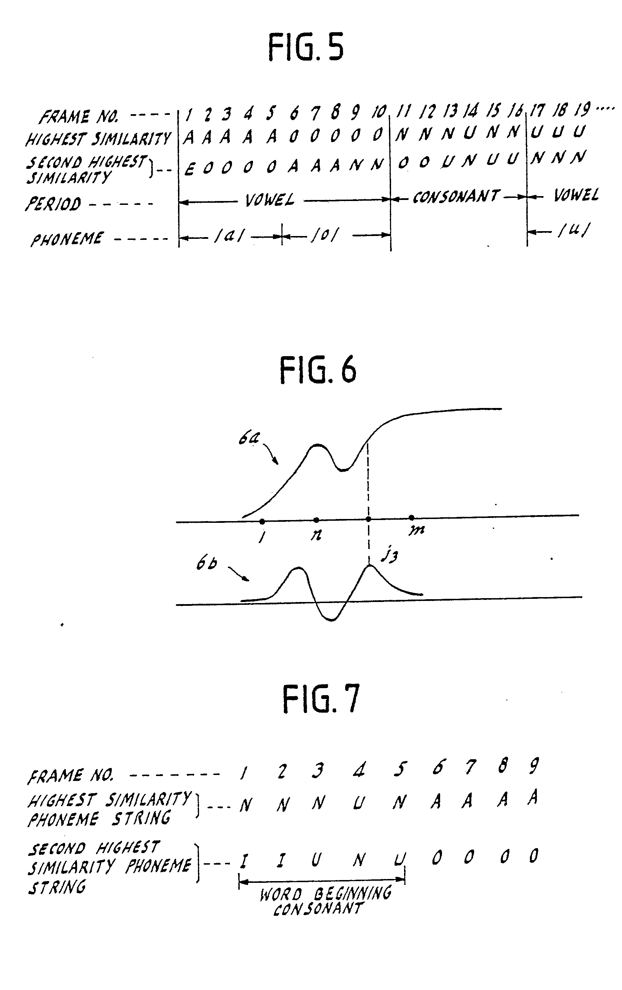

First of all, a first word's beginning consonant detecting method using low-frequency range and high-frequency range power will be described. Fig. 6 shows an example of a time-dependent variation of either low-frequency range or high-frequency range power at a beginning of a word. When word's beginning starts mainly with a plosive consonant, time-dependent variation of a smoothed power value $(\overline{LP_H}, \overline{LP_L})$ is shown by a curve 6a of Fig. 6. The sudden variation of the curve 6a is caused from a sudden rising of power in the plosive sound, and the power value varies at a transient portion to a following vowel. Another curve 6b shows the variation of difference values $(DP_H, DP_L)$ of the time-dependent power variation of the curve 6a as seen in the step E of Fig. 2.

As shown in a step L of Fig. 2, a maximal value $DP_H(j3)$ of $DP_H$ and a maximal value $DP_L(j3')$ of $DP_L$ are obtained, and when $n \leq j3 \leq m$, or $n \leq j3' \leq m$, a period from the beginning of a word (frame 1) to a frame $IH_1$ defined by max(j3, j3') is determined as a word's beginning consonant period wherein n and m are respectively positive integers indicative of thresholds. In the embodiment, values thereof are $n=3$, and $m=10$.

The above method is applied to low-frequency power and high-frequency range power, and when a tendency of the curve 6a of Fig. 6 appears in either thereof, the period is determined as a consonant period. This method is effective for any of plosive sounds since the feature of unvoiced plosive sounds is apt to appear in low-frequency range power while the feature of voiced plosive sounds is apt to appear in high-frequency range power.

Now a second word's beginning consonant detecting method using the results of phoneme recognition at every frame will be described. The phoneme strings $a^{(j)}$ of the highest similarity and the other phoneme strings $b^{(j)}$ of the second highest similarity both derived from the results of phoneme discrimination carried out in connection with vowels and nasal sounds in the step C of Fig. 2, are used in a step M to determine a period from the beginning of a word (frame 1) to a frame $IH_2$ as a word's beginning period if either of $a^{(j)}$ and $b^{(j)}$ is a nasal sound N continuously from the beginning of the word to the frame $IH_2$, and if $IH_2 \geq 5$.

For instance, when phonemes of an input sound /ma/ are recognized every frame, assuming that the result of phoneme recognition is such that as shown in Fig. 7, since N continues for five frames in a combination of the first proposed phoneme strings and the second proposed phoneme strings, a period from the first frame to the fifth frame is determined as a word's beginning consonant period. This method is especially effective for phonemes /m/, /n/, /b/, /d/, /g/ and so on.

Now a third word's beginning consonant detecting method using the voiced sound feature/unvoiced sound feature determination will be described. The segmentation of unvoiced consonants at the beginning of a word can be accurately effected by using voiced sound feature/unvoiced sound feature determination performed for respective frames.

Determination of voiced sound feature and unvoiced sound feature may be effected by using one of zero crossing wave, slope of spectrum, values of self-correlation coefficients of first degree. In the embodiment, such determination is carried out by the comparison with standard patterns for voiced sound feature and unvoiced sound feature determination as seen in a step I of Fig. 2.

More specifically, as seen in a step N, when a predetermined number, such as four, of frames of unvoiced feature continue from the beginning of a word, this period is determined as a consonant period 1 to $IH_3$. This method is effective for all of unvoiced consonants.

Nextly, since there is a phoneme such as /z/ showing voiced sound feature at its first half and unvoiced sound feature at its latter half, when unvoiced frames follow voiced frames lasting from the beginning of a word within a predetermined period of time, such period is determined as a consonant period. For instance, when determination is effected every frame for /ZU/, let us assume that the results of determination are /VVVVUUUVVVV/ wherein V stands for a voiced frame, and U stands for an unvoiced frame. In this case, the entire period until the end of the last unvoiced frame is determined as a word's beginning consonant.

In the embodiment of the present invention, the above-described first to third word's beginning consonant detecting methods are applied in the following order.

*The second method of detection using voiced sound feature/unvoiced sound feature determination for respective frames.

*The first method of detection using features of time-dependent variation in low-frequency range and high-frequency range power of the input speech spectrum.

*The third method of detection using the results of phoneme recognition effected for five vowels and nasal sounds for respective frames.

While applying the above-methods in the above order, when a consonant is detected, then segmentation is effected by the method used for the first detection, and remaining methods or methods is/are not applied.

Although the first to third word's beginning consonant detecting methods are applied in the predetermined order in the embodiment, the present invention is not limited to such predetermined order. In other words, the order of application of the first to third word's beginning consonant detecting methods may be changed if desired as shown in a step O of Fig. 2. Furthermore, if at least one of these first to third word's beginning consonant detecting methods may be used so as to obtain a satisfactory result.

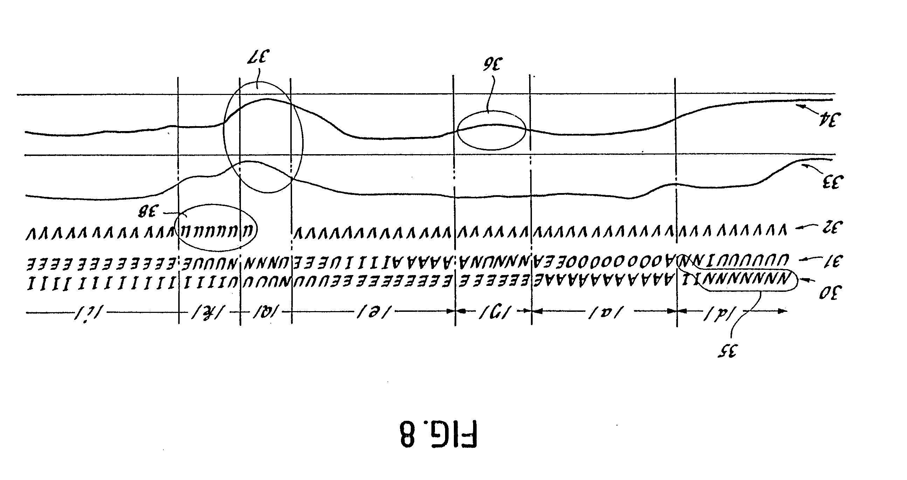

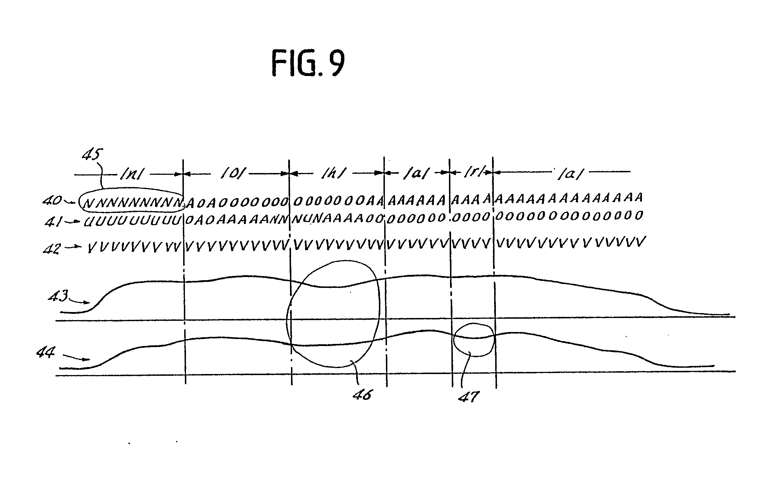

The above-described segmentation of in-word consonants and word's beginning consonants will be further described in detail with reference to Figs. 8 and 9 in connection with examples. Figs. 8 and 9 are diagrams showing respectively examples of pronounciations /daŋeki/ and /noh-ara/ both are Japanese words. In Figs. 8 and 9, the references 30 and 40 indicate time series expressions of phonemes having the highest similarity as the result of vowel and nasal sound discrimination. The references 31 and 41 indicate time series expressions of phonemes having the second highest similarity. The references 32 and 42 indicate time series expressions of the result of voiced/unvoiced frame determination wherein "V" represents a voiced frame, and "u" represents an unvoiced frame. These results indicated at the reference 30 to 32 and 40 to 42 are equivalent to information stored in the similarity buffer 14 of Fig. 1.

Curves 33 and 43 show time-dependent variation of the low-frequency range power, while another curves 34 and 44 show time-dependent variation of the high-frequency range power.

In Fig. 8, since the phoneme time series having the highest similarity of /d/ is a nasal sound "N", segmentation of /d/ is effected regarding it as a consonant. In addition, this portion can also be detected by using the fact that the high-frequency range power information 34 lowers. A phoneme /ŋ/ can be detected because a dip 36 apparently exists in the curve 34 representing the high-frequency range power information. However, this portion cannot be detected from the phoneme time series 30 of the highest similarity, from the phoneme time series 31 of the second highest similarity, or from the low-frequency range power information 33. A silent portion /Q/ appearing before /k/ can be detected from the fact that both the low-frequency range power information 33 and the high-frequency range power information form dips respectively with the power values lowering respectively partially. The phoneme /k/ can be detected by not only the presence of the dips but also by the fact that the time series 32 of the results of voiced/unvoiced frame determination shows unvoiced frames "u" as indicated at the reference 38.

Turning to Fig. 9, although a word's beginning consonant /n/ does not exhibit a remarkable feature in the low-frequency range power information 43 and the high-frequency range power information 44, this consonant /n/ can be detected by the fact that nasal sound frames continue as indicated at the reference 45 in the time series of phonemes whose similarity in the phoneme discrimination is the highest. A phoneme /h/ can be detected from the dips as indicated at the reference 46 in the low-frequency range power information 43 and the high-frequency range power information 44. Furthermore, a phoneme /r/ can be detected from a dip 47 in the high-frequency range power information 44.

As described in connection with examples of Figs. 8 and 9, segmentation of consonants can be effected with high accuracy according to the present invention because time-dependent variation of high-frequency range power and low-frequency range power, the continuity of the results of vowel and nasal sound discrimination along time base, and the results of voiced/unvoiced frame determination are all used jointly.

In this way, it is possible to determine consonant periods 1 to IH, IS to IE, IS' to IE', IS'' to IE'' . . . within overall sound period (frame 1 to frame J), as seen in a step P of Fig. 2, by using the first to third methods of in-word consonant segmentation and the first to third methods of word's beginning consonant segmentation. However, there is a chance that one or both of word's beginning consonant and in-word consonant exist.

Now the function of the consonant similarity calculation portion 18 of Fig. 1 will be described. The consonant similarity calculation portion 18 obtains the similarity $LC_k^{(j)}$ to respective phonemes expressed in terms of k, by calculating the degree of similarity between input parameters fed from the input buffer 11 and consonant standard patterns from the consonant standard pattern storing portion 19, by using one of the Eqs. (1), (2) and (3), for each consonant period detected by the consonant segmentation portion 17 as seen in a step Q of Fig. 2. Then a consonant recognizing portion 20 determines a phoneme of each consonant period in a step R as follows.

When a word's beginning consonant exists, a phoneme which makes:

$$L_k = \sum_{j=i}^{IH} LC_k^{(j)}$$

maximum, is determined as a phoneme of the beginning of the word.

On the other hand, when an in-word consonant exists, a phoneme which makes:

$$L_k = \sum_{j=IS}^{IE} LC_k^{(j)}$$

maximum, is determined as an in-word phoneme.

In the case that a plurality of in-word consonants exist, phonemes thereof are determined in a manner similar to the above.

Now the function of vowel recognizing portion 21 of Fig. 1 will be described with reference to a step S of Fig. Each of periods obtained by removing consonant periods, which have been determined in the step P of Fig. 2, from an overall period of the sound period (1 to J), is expressed by $V_1^{(m)}$ to $V_2^{(m)}$ wherein m=1, 2, . . . M (M is the number of periods). When a semivowel pattern exists in periods $V_1$ to $V_2$, such a period is determined as a semivowel (including a contracted sound) period, and a name of a semivowel /j/ or /w/ is given thereto.

Examples of patterns of semivowels are given below:

for /j/: IEAO, IEA, IEU etc.

for /w/: AOA, UOA, IUA, EUA etc.

If there is a plurality of periods in each of which four or more frames of the highest similarity phoneme $a^{(j)}$ continue in one of the periods $V_1$ to $V_2$, from which semivowel periods have been removed, the period $V_1$ to $V_2$ is divided into a plurality, and a phoneme name for each division is determined. If $a^{(j)}$ does not continue for four or more frames, a most predominant phoneme name is determined including the second highest similarity phoneme $b^{(j)}$.

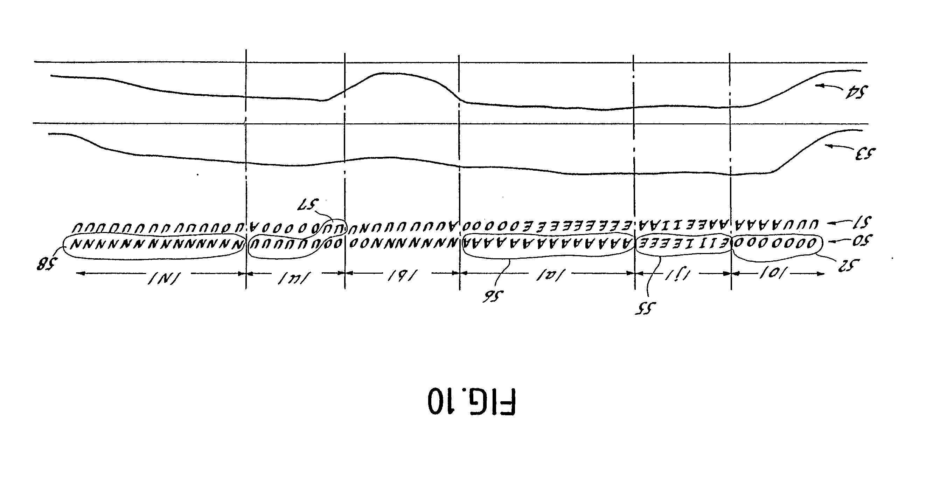

Now the function of the vowel recognizing portion 21 of Fig. 1 will be described in detail with reference to Fig. 10 which shows phonemes in the same form as Figs. 8 and 9 except that the results of voiced/unvoiced frame determination have been omitted. In Fig. 10, a phoneme /o/ located at the beginning of a word is recognized from the continuity of a time series 50 of phonemes showing the highest similarity in the results of phoneme discrimination. Although a semivowel portion /j/ 55 varies from I to E as seen in the time series 50 of the phonemes of the highest similarity, since the lasting period of each is short and since the pattern of transition from I to E is of a typical pattern of /j/, this portion is recognized as /j/. A portion of /a/ is recognized from the continuity of the time series 50 of the phonemes of the highest similarity in the results of phoneme discrimination as indicated at the reference 56. A portion /u/ is recognized as /u/ by using both the time series 51 of phonemes of the highest similarity and a time series 51 of phonemes of the second highest similarity since "U" is predominant while "O" and "U" are mixed as indicated at the reference 57. A syllabic nasal in Japanese /N/ is also recognized from the time series 50 of the phonemes of the highest similarity as indicated at the reference 58.

The above-described way of recognition of semivowels will be further described in detail. In order to recognize semivowels (including contracted sounds), some time series patterns of vowels, whose appearance frequency is especially high among time series patterns of vowels indicating the variation in time series of vowels commonly appearing around semivowel periods, are extracted from time series of vowels produced in advance on the basis of spoken word data pronounced by a plurality of speakers, and the extracted time series are stored in a proposed semivowel detecting vowel time series pattern storing portion which is provided at a portion of the vowel recognizing portion 21. Discrimination of semivowels is effected as follows. The vowel time series fed from the similarity buffer 14 are compared with vowel time series patterns stored in the proposed semivowel detecting vowel time series pattern storing portion for the detection of proposed semivowels, one by one to see matching. When matching is detected, the lasting time of the pattern and phoneme combination rule are considered to finally discriminate a semivowel and to effect segmentation.

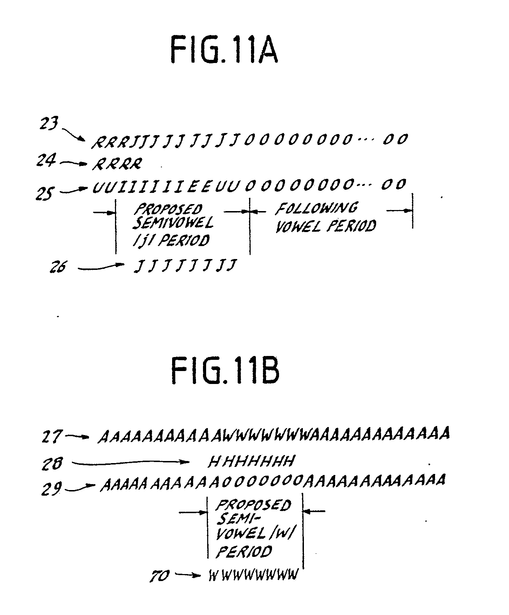

Now examples of recognition of semivowels /j/ and /w/ will be described with reference to Figs. 11A and 11B. Fig. 11A shows a portion /rjo/ which has been extracted from a pronounced word /tesuurjoo/ (tesuryo) which is a Japanese word. A reference 23 indicates phoneme labels given to respective analyzing periods in advance, while a reference 24 indicates the results of recognition of consonants. In this example, a proposed period of a semivowel /j/ is detected from "IEUO" which is one of semivowel detecting vowel time series patterns by using the results 25 obtained by converting the input speech signal into a time series of vowels. In this example, a portion corresponding to the pattern "IEU" is a proposed semivowel period, while a portion corresponding to "O" is a following vowel period. A result of discrimination of the semivowel /j/ is finally obtained as indicated at the reference 26 by considering that the following vowel period is equal to or greater than a threshold, that the proposed semivowel period is below the threshold.

Fig. 11B shows an example of pronounciation of /awa/ which is a Japanese word. A reference 27 indicates phoneme labels which are given to respective analyzing periods in advance, while a reference 28 indicates the results of recognition of consonants. In this example, a proposed period of a semivowel /w/ is detected from "AOA" which is one of semivowel detecting vowel time series patterns by using the results 29 obtained by converting the input speech signal into a time series of vowels. In this example, a portion corresponding to the pattern "O" is a proposed semivowel period, while first and second portions respectively corresponding to "A" are a preceding vowel period and a following vowel period. Since both the preceding vowel period and the following vowel period are equal to or greater than a threshold, and since the proposed semivowel period is below a threshold, this is distinguished from /aoa/ including a pronounciation /aoao/, and it is determined that a semivowel /w/ exists. Furthermore, when a consonant is recognized within a proposed semivowel period, if the consonant has no feature of nasal sounds, a proposed semivowel period is determined by including a consonant period. If this period is below a threshold, and if this period is other than a unvoiced/silent period, priority is given to a semivowel so that a result of recognition as a semivowel /w/ is obtained as indicated at the reference 70.

The phoneme strings producing portion 22 of Fig. 1 produces a phoneme strings by combining the results of consonant recognition fed from the consonant recognizing portion 20 and the results of vowel recognition fed from the vowel recognizing portion 21 as seen in a step T of Fig. 2. The phoneme strings producing portion 22 also has a function of correcting the results of phoneme discrimination by using rules in Japanese pronounciation, such that when consonants other than the syllabic nasal in Japanese are detected in sequence, a vowel /i/ or /u/ should exist therebetween, or that vowels /i/ and /u/ are apt to be unvoiced.

The phoneme strings produced in this way, is compared with the contents of the word dictionary 9 by the word comparison/matching portion 8 so as to output a word showing the highest similarity. The way of such comparison or matching is described in detail in "Spoken Word Recognition System for Unlimited Speakers", by K. Kido, J. Miwa, Y. Niitsu, and S. Makino in IEEE Int. Conf. Acoustics, Speech and Signal Processing, Tulsa, pages 735—738 (published in April, 1978).

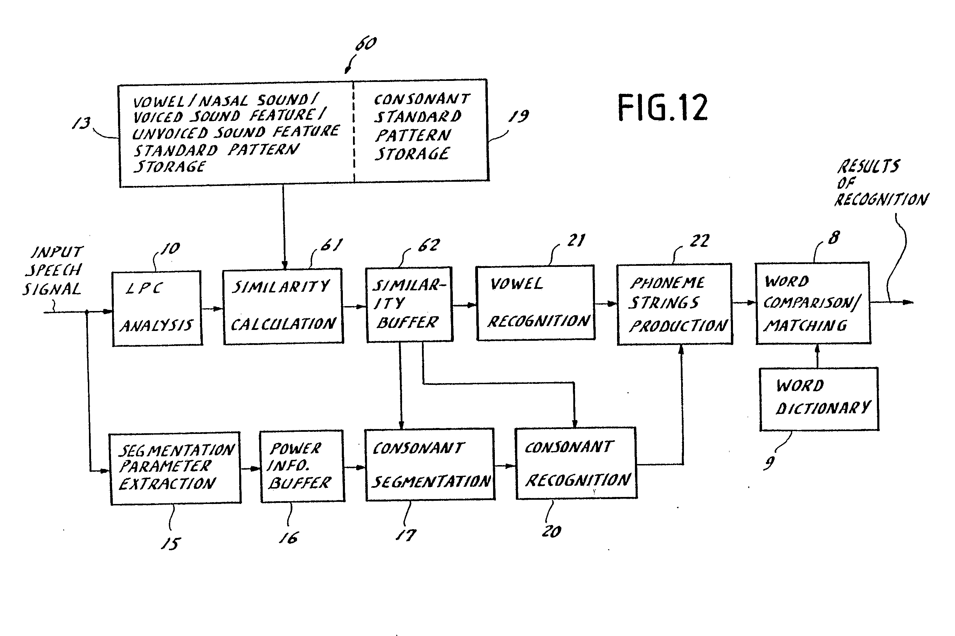

Fig. 12 shows a functional block diagram of another embodiment of the present invention, where this embodiment apparatus contemplates to effect fast processing of speech recognition so that the apparatus is more practical. In the apparatus of Fig. 1, since calculation of similarity to consonants is carried out after the consonant segmentation, time lag is apt to occur, and therefore, the input buffer 11 is needed. The embodiment of Fig. 12 has achieved fast processing by improving such arrangement in Fig. 1. Blocks in Fig. 2 denoted at the same numerals as in Fig. 1 have the same function of the blocks of Fig. 1.

A standard pattern storing portion 60 of Fig. 12 includes both the vowel, nasal sound, voiced sound feature/unvoiced sound feature standard pattern storing portion 13 and the consonant standard pattern storing portion 19 of Fig. 1. A similarity calculation portion 61 calculates similarity to both vowels, nasal sounds and voiced sound feature/unvoiced sound feature and to consonants, and the results of calculation are stored in a similarity buffer respectively. The consonant recognition portion 20 recognizes consonants by using information of a portion determined as a consonant period among consonant similarity data from the similarity buffer 62 by the consonant segmentation portion 17. With this circuit arrangement, although similarity of unnecessary portions is calculated, consonant recognition does not suffer from time lag, and therefore, an excessive buffer would not be needed. Furthermore, since a portion of the similarity calculation portion 61 having a complex structure can be used in common, the embodiment of Fig. 12 has an advantage that the circuit arrangement is simple. Remaining portions of Fig. 12 are the same as those in Fig. 1.

The apparatus according to the present invention has the following advantages compared to conventional apparatus.

(1) Although an input speech signal is analyzed by way of a band pass filter so as to extract a local peak which is used as a feature parameter in conventional arrangements, in the present invention LPC cepstrum coefficients are extracted by way of an LPC analysis for using the same as a feature parameter. Since LPC analysis is capable of removing glottal information including individual feature from an input speech signal waveform, it is possible to provide apparatus which is good at spoken words from unspecific speakers. In addition, because of the removal of glottal information, phoneme features are emphasized relatively, and therefore, a high rate of phoneme recognition for each frame can be obtained.

Moreover, while the local peak is a parameter mainly indicative of Formant of spoken sounds, LPC cepstrum coefficients are parameters indicative of an overall brief shape of a spectrum including Formant, and accordingly, the latter includes much information compared to the former so that the latter is useful for improving the recognition rate. Especially LPC cepstrum coefficients are effective for the distinguishment between unvoiced consonants which show unclear Formant structure.

(2) In the conventional apparatus, the method of applying the local peak to a discriminant diagram is used for discriminating a phoneme for each frame, whereas in the present invention, pattern matching/comparison is performed between input LPC cepstrum coefficients and standard patterns by using a statistical distance measure, such as Mahalanobis' distance, Bayes' discriminant, linear discriminant function or the like. As a result, an average rate of vowel recognition for each frame is 85.2% according to the present invention, whereas the same is 78.4% in the conventional apparatus.

(3) In the conventional apparatus, the presence of a consonant is detected by using only segmentation parameters, and therefore, voiced consonants, such as nasal sounds and /r/ sometimes could not detected. On the contrary, according to the present invention in addition to segmentation parameters, results of phoneme recognition for respective frames effected for five vowels and nasal sounds (/m/, /n/, syllabic nasal in Japanese) as well as the results of determination of voiced sound feature/unvoiced sound feature for respective frames are jointly used. More specifically, in the case that nasal sound frames continue in the results of phoneme recognition, it is determined as a voiced consonant period, and in the case that unvoiced frames continue in the results of voiced sound feature/ unvoiced sound feature determination, such a period is determined as a unvoiced consonant period. With this operation, the rate of dropout of segmentation of consonants can be remarkably reduced.

(4) Low-frequency range power and high-frequency power information is employed as parameters for effecting segmentation in the present invention. By using such parameters, segmentation can be effected with high reliability compared to the conventional method in which overall frequency range power and slope of spectrum are used.

(5) In an experiment of speech recognition carried out for 200 words of names of cities spoken by each of 40 unspecific speakers including men and women, a satisfactory recognition rate of 95% has been achieved according to the present invention, whereas an average recognition rate according to conventional methods is only 88%. Furthermore, it has been proved that the present invention is suitable for recognition of spoken words from unspecific speakers because variation in recognition rate due to individual difference is small when compared to the conventional methods. The reason of such suitability for recognition of speech from unspecific persons is that the similarity calculation is effected on the basis of a statistical distance measure by using LPC cepstrum coefficients as feature parameters, and that the accuracy in segmentation is improved.

From the foregoing, it will be understood that according to the present invention the phoneme recognition rate for respective frames is improved, an average vowel recognition rate being improved, dropout rate of consonant segmentation being reduced, the reliability of segmentation being increased, and high recognition rate for unspecific speakers being obtained while recognition is effected at a high speed.

**Claims**

1. Apparatus for speech recognition, comprising:

(a) a spectrum analysing portion (10, 15) for obtaining parameters indicative of the spectrum of an input speech signal;

(b) a standard pattern storing portion (13, 19) for storing phoneme standard patterns of phonemes or phoneme groups;

(c) a similarity calculating portion (12, 18) for calculating the degree of similarity between the results from said spectrum analysing portion (10, 15) and standard patterns from said standard pattern storing portion (13, 19);

(d) a segmentation portion (17) for effecting segmentation; and

(e) a phoneme discriminating portion (20, 21) for recognising phonemes by using the results from said similarity calculating portion, characterised in that:

the spectrum analysis is performed by way of linear prediction analysis to obtain a set of LPC cepstrum coefficients; in that: said degree of similarity is calculated by using a statistical distance measure; and in that segmentation is effected by using the results from said similarity calculating portion (12) and the time dependent variation of power information in a low-frequency range

and, independently, in a high-frequency range of the input speech signal spectrum.

2. Apparatus for speech recognition, comprising:

(a) a spectrum analysis portion (10, 15) for obtaining spectrum information of an input speech signal;

(b) a first similarity calculating portion (12);

(c) a first recognition portion (21) for effecting segmentation and recognition by using the continuity of the results from said first similarity calculation portion (12);

(d) a segmentation parameter extracting portion (15) for obtaining low-frequency range over power information and high-frequency range power information of said input speech signal;

(e) a consonant segmentation portion (17);

(f) a second similarity calculation portion (18);

(g) a second recognition portion (20) for recognising phonemes of consonants on the basis of the results from said second similarity calculation portion (18);

(h) a phoneme strings producing portion (22) for producing phoneme strings by using the results from said first recognition portion (21) and the results from said second recognition portion (20); and

(i) a matching portion (8) for effecting comparison/matching between the results from said phoneme strings producing portion (22) and dictionary items included in word dictionary (9) so as to output a dictionary item which shows highest similarity to said phoneme strings; characterised in that:

said spectrum information is a set of LPC cepstrum coefficients obtained by way of linear predictive analysis; in that the first similarity calculation portion (12, 14) obtains, by using a statistical distance measure, the degree of similarity of said input speech to phonemes of features of vowels, voiced sounds and unvoiced sounds by calculating the degree of similarity between the results from said spectrum analysing portion (10) and standard patterns from a standard pattern storing portion (13); in that the consonant segmentation portion (17) effects segmentation of phonemes of consonants by using the results from said first similarity calculation portion (12, 14) and time-dependent variation of said power information in low-frequency range and, independently, in a high-frequency range of the input speech signal spectrum; and in that the second similarity calculation portion calculates, by using a statistical distance measure, the degree of similarity between coefficients from said spectrum analysing portion (10) and standard patterns of phonemes of consonants from said standard pattern storing portion (19) for respective periods obtained by said consonant segmentation portion (17).

3. Apparatus according to claim 2 characterised in that said first similarity calculation portion comprises a vowel similarity calculation portion and a voiced/unvoiced sound feature determining portion; said first recognition portion (21) comprises a vowel recognition portion; said second similarity calculation portion comprises a consonant similarity calculation portion; and said second recognition portion comprises a consonant recognition portion.

4. Apparatus according to claim 2 or 3 characterised in that said standard pattern storing portion (13, 19) stores standard patterns produced in advance for respective phonemes or phoneme groups in accordance with speech from a number of speakers; said first similarity calculation portion obtains a time series of phonemes whose similarity is the highest with feature parameters obtained from said input speech signal being compared with said standard patterns; and consonant segmentation portion (17) detects words beginning vowels and consonants such that a period where one of vowels is stably lasting around a beginning end of an input speech is determined as a vowel period, and a period where as vowel does not last or a period where nasal sound or unvoiced sound appears is determined as a consonant period.

5. Apparatus as claimed in any one of claims 2 to 4 characterised in that low-frequency range power information and high-frequency range power information, which have been respectively obtained by said segmentation parameter extracting portion (15), are jointly used as information for effecting segmentation in speech recognition, and then a proposed consonant period is detected by said consonant segmentation portion (17) by using power dips occurring due to time-dependent variation in said power information, for detecting a consonant period from said proposed consonant period.

6. Apparatus as claimed in claim 5 characterised in that said proposed consonant period is detecting a maximal value and a minimal value in the rate of said time-dependent variation of said low-frequency range power information and said high-frequency range power information, and a time length between points of said maximal and minimal values, then said consonant segmentation portion (17) detects a consonant period from said proposed consonant period by applying the magnitude of power dips of said low-frequency range power information and said high-frequency range power information with the difference between said maximal and minimal values within said proposed consonant period being regarded as said magnitude of dips.

7. Apparatus as claimed in claim 6, characterised in that said magnitude of dips of said low-frequency range and said high-frequency range are used as parameters such that said consonant period is detected from said proposed consonant period by comparing said parameters with standard patterns prepared in advance, by using a statistical distance measure.

8. Apparatus as claimed in claim 6, characterised in that said magnitude of dips of said low-frequency range is applied to a discriminant diagram respectively for detecting said consonant period from said proposed consonant period.

9. Apparatus as claimed in any one of claims 2 to 8 characterised in that said consonant segmentation portion detects an in-word consonant period by using one or more of the following first to third methods where:

the first method is such that a consonant period is detected by using jointly magnitude of power dips respectively occurring due to time-dependent variation of said low-frequency range power and said high-frequency range power of said spectrum of said input speech signal;

the second method is such that said first recognition portion recognises all frames included in a overall sound period as vowels or nasal sounds, and then when a period in which a predetermined number of or more frames recognized as a nasal sound continue, the period of frame continuation is detected as a consonant period; and

the third method is such that said first similarity calculation portion (12) effects voiced/unvoiced frame determination for all frames included in an overall sound period, and when unvoiced sound frames continue for more than a predetermined number, the period of frame continuation is detected as a consonant period.

10. Apparatus as claimed in any one of claims 2 to 8 characterised in that segmentation of a word's beginning consonant is effected by said consonant segmentation portion (17) by applying the following first to third methods in an arbitrary order such that when a consonant is detected by one or two of said first to third methods, remaining method or methods is/are not applied, where:

the first method is such that a word's beginning consonant is detected by capturing time-dependent variation, at the beginning of a word, in low-frequency range power and high-frequency range power of the spectrum of said input speech signal;

the second method is such that a word's beginning consonant is detected by using the results of voiced/unvoiced frame determination effected by said first similarity calculation portion (12, 14) for respective frames of a sound period; and

the third method is such that a wrod's beginning consonant is detected by using the results of recognition of five vowels and nasal sounds effected by said first recognition portion (21) for respective frames.

11. Apparatus as claimed in any one of claims 2 to 8 characterised in that first similarity calculation portion (12) is arranged to determine whether a sound shows a voiced sound feature or unvoiced sound feature from a similarity between LPC cepstrum coefficients and two standard patterns by using a statistical distance measure where said LPC cepstrum coefficients are used parameters indicative of the shape of the spectrum of said input speech signal, and said statistical distance measure is used as a measure of similarity, with said two standard patterns indicative of the shape of an average spectrum of voiced sounds and unvoiced sounds being stored in advance in said standard pattern storing portion.

12. Apparatus as claimed in claim 1, 4 or 11 characterised in that said statistical distance measure is one of Bayes' discriminant, Mahalanobis' distance and linear discriminant function.

13. Apparatus as claimed in any one of claims 2 to 12 wherein said first (12) and second (18) similarity calculation portions are constructed such that a portion thereof is commonly used.

**Patentansprüche**

1. Vorrichtung zur Spracherkennung mit:

a) einem Spektralanalyseabschnitt (10, 15) zur Erzielung von für das Spektrum eines eingegebenen Sprachsignales bezeichnenden Parametern,

b) einem Standardmuster-Speicherabschnitt (13, 19) zum Speichern von Phonem-Standardmustern von Phonemen oder Phonem-Gruppen,

c) einem Ähnlichkeits-Errechnungsabschnitt (12, 18) zum Errechnen des Ähnlichkeitsgrades aus den Resultaten von dem Spektralanalyseabschnitt (10, 15) und Standardmustern aus dem Standardmuster-Speicherabschnitt (13, 19),

d) einem Segmentierungsabschnitt (17) zur Erzielung von Segmentierung, und

e) einem Phonem-Diskriminierungsabschnitt (20, 21) zum Erkennen von Phonemen durch Benutzung der Resultate aus dem Ähnlichkeits-Errechnungsabschnitt, dadurch gekennzeichnet, daß

die Spektralanalyse auf dem Weg linearer Prädiktionsanalyse angeführt wird, um eine Reihe von LPC-Cepstrum Koeffizienten zu erhalten, daß der Ähnlichkeitsgrad unter Benutzung eines statistischen Abstandsmaßes errechnet wird und daß die Segmentierung bewirkt wird durch Benutzung der Resultate von dem Ähnlichkeitserrechnungsabschnitt (12) und der zeitabhängigen Variation von Leistungsinformation in einem Niederfrequenzbereich und unabhängig davon in einem Hochfrequenzbereich des Spektrums des eingehenden Sprachsignales.

2. Vorrichtung zur Spracherkennung mit:

a) einem Spektralanalyseabschnitt (10, 15) zum Erzielen von Spektralinformation eines eingehenden Sprachsignales,

b) einem ersten Ähnlichkeitserrechnungsabschnitt (12),

c) einem ersten Erkennungsabschnitt (21) zum Bewirken von Segmentierung und Erkennung unter Benutzung der Kontinuität der Resultate von dem ersten Ähnlichkeitserrechnungsabschnitt (12),

d) einem Segmentierungs-Parameter-Abtrenn-Abschnitt (15) zur Erzielung von Niederfrequenzbereich-Leistungsinformation und Hochfrequenzbereich-Leistungsinformation von dem eingehenden Sprachsignal,

e) einem Konsonanten-Segmentierungsabschnitt (17),

f) einem zweiten Ähnlichkeitserrechnungsabschnitt (18),

g) einem zweiten Erkennungsabschnitt (20) zum Erkennen von Phonemen aus Konsonanten auf Grundlage der Resultate von dem zweiten Ähnlichkeitserrechnungsabschnitt (18),

h) einem Phonemketten-Erzeugungsabschnitt (22) zur Erzeugung von Phonemketten durch Benutzung der Resultate von dem ersten Erkennungsabschnitt (21) und der Resultate von dem zweiten Erkennungsabschnitt (20) und

i) einen Anpaßabschnitt (8) zur Erzielung von Vergleich Anpassung zwischen den Resultaten von dem Phonemreihen-Erzeugungsabschnitt (22) und in einem Wörterbuch (9) enthaltenen Wörterbuch-Eintragungen, um so eine Wörterbucheintragung auszugeben, die höchste Ähnlichkeit zu den Phonemreihen zeigt, dadurch gekennzeichnet, daß:

die Spektralinformation eine Reihe von LPC-Cepstrum-Koeffizienten ist, erzielt auf dem Wege linearer Vorhersageanalyse, daß der erste Ähnlichkeitserrechnungsabschnitt (12, 14) durch Benutzung eines statistischen Abstandsmaßes den Ähnlichkeitsgrad der eingehenden Sprache mit Phonemen von Eigenschaften von Vokalen, stimmhaften Lauten und stimmlosen Lauten erzielt durch Errechnung des Ähnlichkeitsgrades der Resultate von dem Spektralanalyseabschnitt (10) mit den Standardmustern von einem Standardmuster-Speicherabschnitt (13), daß der Konsonant-Segmentierungsabschnitt (17) Segmentierung von Phonemen von Konsonanten durch Benutzung der Resultate von dem ersten Ähnlichkeitserrechnungsabschnitt (12, 14) und zeitabhängiger Änderung der Leistungsinformation in einem Niederfrequenzbereich und unabhängig davon in einem Hochfrequenzbereich des Spektrums der eingehenden Sprachsignale bewirkt und daß der zweite Ähnlichkeitserrechnungsabschnitt durch Benutzung eines statistischen Abstandsmaßes den Ähnlichkeitsgrad von Koeffizienten von dem Spektralanalyseabschnitt (10) mit Standardmustern von Phonemen von Konsonanten aus dem Standardmusterspeicherabschnitt (19) während jeweiliger Zeitlängen errechnet, die durch den Konsonanten-Segmentierungsabschnitt (17) erzielt sind.

3. Vorrichtung nach Anspruch 2, dadurch gekennzeichnet, daß der erste Ähnlichkeitserrechnungsabschnitt einen Vokalähnlichkeitserrechnungsabschnitt und einem stimmhaft/stimmlos-Lauteigenschafts-Bestimmungsabschnitt umfaßt, daß der erste Erkennungsabschnitt (21) einen Vokalerkennungsabschnitt umfaßt, daß der zweite Ähnlichkeitserrechnungsabschnitt einen Konsonantenähnlichkeits-Errechnungsabschnitt umfaßt und daß der zweite Erkennungsabschnitt einen Konsonanten-Erkennungsabschnitt umfaßt.

4. Vorrichtung nach Anspruch 2 oder 3, dadurch gekennzeichnet, daß der Standardmuster-Speicherabschnitt (13, 19) vorher für jeweilige Phoneme oder Phonemgruppen in Übereinstimmung mit Sprache von einer Anzahl von Sprechern erzeugte Standardmuster speichert, daß der erste Ähnlichkeitserrechnungsabschnitt eine Zeitreihe von Phonemen erzielt, deren Ähnlichkeit die höchste ist mit Eigenschaftsparametern, die von dem eingehenden Sprachsignal abgeleitet sind im Vergleich mit den Standardmustern, und daß der Konsonantsegmentierungsabschnitt (17) Wortbeginnvokale und -Konsonanten erfaßt, so daß eine Zeit, in der ein Vokal stabil um den Anfang einer einkommenden Sprache dauert, als eine Vokalzeit bestimmt wird und eine Zeit, in der kein Vokal andauert, oder eine Zeit, in der ein nasaler oder ein stimmloser Laut erscheint, als eine Konsonantenzeit bestimmt ist.

5. Vorrichtung nach einem der Ansprüche 2 bis 4, dadurch gekennzeichnet, daß Niederfrequenzbereich-Leistungsinformation und Hochfrequenzbereich-Leistungsinformation, die jeweils durch den Segmentierungsparameter-Abtrennabschnitt (15) erhalten sind, zusammen als Information zur Bewirkung der Segmentierung bei Spracherkennung benutzt werden und dann eine vorgeschlagene Konsonantenzeit durch den Konsonantensegmentierungsabschnitt (17) erfaßt wird unter Benutzung von Leistungssenken, die infolge von zeitabhängiger Veränderung der Leistungsinformation auftreten, zum Erfassen einer Konsonantenzeit aus der vorgeschlagenen Konsonantenzeit.

6. Vorrichtung nach Anspruch 5, dadurch gekennzeichnet, daß die vorgeschlagene Konsonantenzeit einen Maximalwert und einen Minimalwert in der Rate der zeitabhängigen Veränderung der Niederfrequenzbereich-Leistungsinformation und der Hochfrequenzbereich-Leistungsinformation erfaßt und eine Zeitlänge zwischen den Stellen der Maximal- und der Minimal-Werte, daß dann der Konsonanten-Segmentierungsabschnitt (17) eine Konsonantenzeitlänge aus der vorgeschlagenen Konsonantenzeitlänge erfaßt durch Anwenden der Größe der Leistungssenken der Niederfrequenzbereich-Leistungsinformation und der Hochfrequenzbereich-Leistungsinformation, wobei die Differenz zwischen den Maximal- und Minimalwerten innerhalb der vorgeschlagenen Konsonantenzeitlänge als die Größe der Senken betrachtet wird.

7. Vorrichtung nach Anspruch 6, dadurch gekennzeichnet, daß die Größe der Senken des Niederfrequenzbereiches und des Hochfrequenzbereiches als Parameter so benutzt werden, daß die Konsonantenzeitlänge aus der vorgeschlagenen Konsonantenzeitlänge durch Vergleich der Parameter mit vorher erzeugten Standardmustern erfaßt wird, durch Benutzung eines statistischen Abstandsmaßes.

8. Vorrichtung nach Anspruch 6, dadurch gekennzeichnet, daß die Größe der Senken des Niederfrequenzbereiches auf ein Diskriminanten-Diagramm angewendet wird, jeweils zur Erfassung der Konsonantenzeitlänge aus der vorgeschlagenen Konsonantenzeitlänge.

9. Vorrichtung nach einem der Ansprüche 2 bis 8, dadurch gekennzeichnet, daß der Konsonantensegmentierungsabschnitt eine Inner-Wort-Konsonantenzeitlänge erfaßt durch Benutzung eines oder mehrerer der folgenden ersten bis dritten Verfahren, wobei:

das erste Verfahren so verläuft, daß eine Konsonantenzeitlänge durch gemeinsame Benutzung der Leistungssenken erfaßt wird, die jeweils infolge einer zeitabhängigen Veränderung der Niederfrequenzbereichleistung bzw. der Hochfrequenzbereichleistung des Spektrums des eingehenden Sprachsignales auftreten,

das zweite Verfahren so ist, daß der erste Erkennungsabschnitt alle in einer Gesamt-Schallzeit als Vokale oder Nasalklänge enthaltenen Vorgänge erkennt, und dann, wenn ein Zeitabschnitt, in dem eine vorbestimmte Anzahl oder mehr als Nasalklang erkannte Vorgänge anhalten, die Zeitdauer des anhaltenden Vorganges als eine Konsonantenzeitabschnitt erkannt wird, und

das dritte Verfahren so ist, daß der erste Ähnlichkeitserrechnungsabschnitt (12) eine Bestimmung von stimmhaften und stimmlosen Vorgängen für alle in einer Gesamtschallzeitdauer enthaltenen Vorgänge bewirkt, und, wenn stimmlose Klangvorgänge sich während mehr als einer vorbestimmten Anzahl fortsetzen, die Zeitdauer fortgesetzter Vorgänge als eine Konsonantenzeitdauer erfaßt wird.

10. Vorrichtung nach einem der Ansprüche 2 bis 8, dadurch gekennzeichnet, daß die Segmentierung eines Wortanfangs-Konsonanten durch den Konsonantensegmentierungsabschnitt (17) dadurch bewirkt wird, daß das nachfolgende erste bis dritte Verfahren in willkürlicher Reihenfolge so angewandt wird, daß, wenn ein Konsonant durch ein oder zwei der ersten bis dritten Verfahren erfaßt wird, das restliche Verfahren oder die restlichen Verfahren nicht angewandt wird/werden, wobei:

das erste Verfahren so ist, daß ein Wortanfangskonsonant erfaßt wird durch Aufnehmen zeitabhängiger Variation am Anfang eines Wortes in Niederfrequenzbereichleistung und Hochfrequenzbereichleistung des Spektrums des anliegenden Sprachsignales,

das zweite Verfahren so ist, daß ein Wortanfangskonsonant erfaßt wird durch Benutzung der Ergebnisse der Bestimmung stimmhafter/stimmloser Vorgänge, bewirkt durch den ersten Ähnlichkeitserrechnungsabschnitt (17, 18) bei jeweiligen Vorgängen einer Schallzeitdauer, und

das dritte Verfahren so ist, daß ein Wortanfangskonsonant erfaßt wird durch Benutzung der Resultate der Erkennung von fünf Vokalen und Nasallauten, bewirkt durch den ersten Erkennungsabschnitt (21) bei jeweiligen Vorgängen.

11. Vorrichtung nach einem der Ansprüche 2 bis 8, dadurch gekennzeichnet, daß der erste Ähnlichkeitserrechnungsabschnitt (12) ausgelegt ist, zu bestimmen, ob ein Laut eine Eigenschaft eines stimmhaften oder eines stimmlosen Lautes zeigt aus einer Ähnlichkeit zwischen LPC Cepstrum-Koeffizienten und zwei Standardmustern unter Benutzung eines statistischen Abstandsmaßes, wobei die LPC Cepstrum-Koeffizienten als Parameter benutzt werden, die für die Form des Spektrums des anliegenden Sprachsignales bezeichnend sind und das statistische Abstandsmaß als ein Ähnlichkeitsmaß benutzt wird, wobei die zwei für die Form eines durchschnittlichen Spektrums von stimmhaften Lauten und stimmlosen Lauten bezeichnenden Standardmuster vorher in dem Standardmuster-Speicherabschnitt gespeichert sind.

12. Vorrichtung nach Anspruch 1, 4 oder 11, dadurch gekennzeichnet, daß das statistische Abstandsmaß eine der folgenden ist: Bayes'sche Diskriminante, Mahalanobis-Abstand und lineare Diskriminantenfunktion.

13. Vorrichtung nach einem der Ansprüche 2 bis 12, bei der der erste (12) und der zweite (18) Ähnlichkeitserrechnungsabschnitt so aufgebaut sind, daß ein Teil davon gemeinsam verwendet wird.

**Revendications**

1. Appareil pour la reconnaissance de la parole, comprenant:

(a) une partie (10, 15) d'analyse de spectre pour obtenir des paramètres indicatifs du spectre d'un signal vocal d'entrée;

(b) une partie (13, 19) de mémorisation de modèles normalisés pour mémoriser des modèles normalisés de phonèmes ou de groupes de phonèmes;

(c) une partie (12, 18) de calcul de similarité pour calculer le degré de similarité entre les résultats en provenance de la partie (10, 15) d'analyse de spectre et les modèles normalisés en provenant de la partie (13, 19) de mémorisation de modèles normalisés;

(d) une partie (17) de segmentation pour effectuer une segmentation; et

(e) une partie (20, 21) de discrimination de phonèmes pour identifier les phonèmes en utilisant les résultats en provenance de la partie de calcul de similarité, caractérisé en ce que:

l'analyse de spectre est exécutée par voie d'analyse prédictive linéaire pour obtenir un ensemble de coefficients cepstrum LPC; en ce que le degré de similarité est calculé par utilisation d'une mesure de distance statistique; et en ce qu'une segmentation est effectuée par utilisation des résultats en provenance de la partie (12) de calcul de similarité et de la variation dans le temps des informations relatives à la puissance dans une plage de basse fréquence et, indépendamment, dans une plage de haute fréquence du spectre du signal vocal d'entrée.

2. Appareil pour la reconnaissance de la parole, comprenant:

(a) une partie (10, 15) d'analyse de spectre pour obtenir des informations relatives au spectre d'un signal vocal d'entrée;

(b) une première partie (12) de calcul de similarité;

(c) une première partie (21) d'identification pour effectuer une segmentation et une identification en utilisant la continuité des résultats en provenance de la première partie (12) de calcul de similarité;

(d) une partie (15) d'extraction de paramètres de segmentation pour obtenir les informations relatives à la puissance sur une plage de basse fréquence et des informations relatives à la puissance sur une plage de haute fréquence du signal vocal d'entrée;

(e) une partie (17) de segmentation de consonne;

(f) une seconde partie (18) de calcul de similarité;

(g) une seconde partie (20) d'identification pour identifier les phonèmes des consonnes en se basant sur les résultats en provenance de la seconde partie (18) de calcul de similarité;

(h) une partie (22) de production de chaînes de phonèmes pour produire des chaînes de phonèmes en utilisant les résultats en provenance de la première partie (21) d'identification et les résultats en provenance de la seconde partie (20) d'identification; et

(i) une partie (8) d'appariement pour effectuer une comparaison/appariement entre les résultats en provenance de la partie (22) de production de chaînes de phonèmes et des articles de dictionnaire compris dans un dictionnaire (9) de mots, de manière à émettre un article de dictionnaire qui montre la similarité la plus grande avec les chaînes de phonèmes, caractérisé en ce que:

les informations relatives au spectre constituent un ensemble de coefficients LPC de cepstrum obtenus par voie d'analyse prédictive linéaire; en ce que la première partie (12, 14) de calcul de similarité obtient, par utilisation d'une mesure de distance statistique, le degré de similarité du signal vocal d'entrée vis-à-vis des phonèmes ayant les caractéristiques de voyelles, de sons voisés et de sons non voisés à l'aide d'un calcul du degré de similarité entre les résultats en provenance de la partie (10) d'analyse de spectre et les modèles normalisés en provenance de la partie (13) de mémorisation de modèle normalisé; en ce que la partie (17) de segmentation de consonne effectue une segmentation des phonèmes de consonnes en utilisant les résultats en provenance de la première partie (12, 14) de calcul de similarité et la variation dans le temps des informations relatives à la puissance dans la plage de basse fréquence et, indépendamment, dans la plage de haute fréquence du spectre du signal vocal d'entrée; et en ce que la seconde partie de calcul de similarité calcule, en utilisant une mesure de distance statistique, le degré de similarité entre les coefficients en provenance de la partie (10) d'analyse de spectre et les modèles normalisés de phonèmes de consonnes en provenance de la partie (19) de mémorisation de modèles normalisés pour les périodes respectives obtenues à l'aide de la partie (17) de segmentation de consonne.

3. Appareil selon la revendication 2, caractérisé en ce que la première partie de calcul de similarité comprend une partie de calcul de similarité de voyelles et une partie de détermination de caractéristique de sons voisés/non voisés; la première partie (21) d'identification comprend une partie d'identification de voyelles; la seconde partie de calcul de similarité comprend une partie de calcul de similarité de consonnes; et la seconde partie d'identification comprend une partie d'identification de consonnes;

4. Appareil selon la revendication 2 ou 3, caractérisé en ce que: la partie (13, 19) de mémorisation de modèles normalisés mémorise des modèles normalisés produits à l'avance pour des phonèmes ou des groupes de phonèmes respectifs en fonction des paroles provenant de plusieurs orateurs; wa première partie de calcul de similarité obtient dans le temps une série de phonèmes dont la similarité est la plus grande, les paramètres de caractéristiques obtenus à partir du signal vocal d'entrée étant comparés avec les modèles normalisés; et une partie (17) de segmentation de consonnes détecte les mots commençant par des voyelles et des consonnes, de telle sorte qu'une période où une des voyelles se maintient de façon stable vers le début de la fin d'un signal vocal d'entrée est déterminée comme étant une période de voyelle, et une période où une voyelle ne persiste pas ou bien une période où un son nasal ou un son non voisé apparaît est déterminée comme étant une période de consonne.

5. Appareil selon l'une quelconque des revendications 2 à 4, caractérisé en ce que les informations relatives à la puissance dans une plage de basse fréquence et les informations relatives à la puissance dans une plage de haute fréquence, qui ont été obtenues respectivement à l'aide de la partie (15) d'extraction de paramètres de segmentation, sont utilisées conjointement comme des informations pour effectuer une segmentation dans une reconnaissance de la parole, et une période de consonne proposée est ensuite détectée par la partie (17) de segmentation de consonne par utilisation de baisses de puissance apparaissant par suite des variations en fonction du temps des informations relatives à la puissance pour détecter une période de consonne à partir de la période de consonne proposée.

6. Appareil selon la revendication 5, caractérisée en ce que la période consonne proposée détecte une valeur maximale et une valeur minimale dans la vitesse de variation, en fonction du temps, des informations relatives à la puissance dans une gamme de basse fréquence et des informations de puissance dans une gamme de haute fréquence, et une durée entre les points desdites valeurs maximale et minimale, puis la partie (17) de segmentation de consonne détecte une période de consonne à partir de la période de consonne proposée en appliquant l'amplitude des baisses de puissance des informations relatives à la puissance dans une plage de basse fréquence et des informations relatives à la puissance dans une plage de haute fréquence, la différence entre les valeurs maximale et minimale dans les limites de la période de consonne proposée étant considérée comme étant l'amplitude des baisses de puissance.

7. Appareil selon la revendication 6, caractérisé en ce que l'amplitude des baisses de puissance dans la plage de basse fréquence et dans la plage de haute fréquence sont utilisées comme paramètres, de telle sorte que la période de consonne est détectée à partir de la période de consonne proposée par comparaison des paramètres avec les modèles normalisés préparés à l'avance, par utilisation d'une mesure de distance statistique.

8. Appareil selon la revendication 6, caractérisé en ce que l'amplitude des baisses de puissance dans la plage de basse fréquence est appliquée à un diagramme de discrimination pour détecter respectivement la période de consonne à partir de la période de consonne proposée.

9. Appareil selon l'une quelconque des revendications 2 à 8, caractérisé en ce que la partie de segmentation de consonne détecte une période de consonne dans un mot en utilisant un ou plusieurs des premier à troisième procédés suivants, parmi lesquels:

le premier procédé est tel qu'une période de consonne est détectée par utilisation conjointement de l'amplitude des baisses de puissance apparaissant respectivement en raison des variations, en fonction du temps, de la puissance dans une plage de basse fréquence et de la puissance dans une plage de haute fréquence du spectre du signal vocal d'entrée;

le second procédé est tel que la première partie d'identification identifie toutes les fenêtres incluses dans une période globale de son comme étant des voyelles ou des sons nasaux et, ensuite, dans le cas d'une une période au cours de laquelle un nombre prédéterminé de fenêtres ou un nombre plus élevé de fenêtres identifiées comme étant un son nasal se prolongent, la période de prolongement de la structure est détectée comme étant une période de consonne; et

le troisième procédé est tel que la première partie (12) de calcul de similarité effectue une détermination de fenêtres voisées/non voisées pour toutes les fenêtres incluses dans une période globale de son et, quand des fenêtres non voisées de son se prolongent pendant un nombre supérieur à un nombre prédéterminé, la période de prolongement des fenêtres est détectée comme étant une période de consonne.

10. Appareil selon l'une quelconque des revendications 2 à 8, caractérisé en ce que la segmentation d'une consonne de début de mot est effectuée à l'aide de la partie (17) de segmentation de consonne par application des premier à troisième procédés suivants dans un ordre arbitraire, de telle sorte que lorsqu'une consonne est détectée à l'aide d'un ou de deux desdits premier à troisième procédés, le ou les procédés restants ne sont pas appliqués:

le premier procédé est tel qu'une consonne de début de mot est détectée par saisie de la variation dans le temps, au début d'un mot, de la puissance dans la plage de basse fréquence et de la puissance dans la plage de haute fréquence du spectre du signal vocal d'entrée;

le second procédé est tel qu'une consonne de début de mot est détectée par utilisation des résultats d'une détermination de fenêtre voisée/non voisée effectuée à l'aide de la première partie (12, 14) de calcul de similarité pour des fenêtres respectives d'une période sonore; et

le troisième procédé est tel qu'une consonne de début de mot est détectée par utilisation des résultats d'une reconnaissance de cinq voyelles et sons nasaux effectuée à l'aide de la première partie (21) d'identification pour les fenêtres respectives.

11. Appareil selon l'une quelconque des revendications 2 à 8, caractérisé en ce que la première partie (12) de calcul de similarité est conçue pour déterminer si oui ou non un son montre une caractéristique de son voisé ou une caractéristique de son non voisé à partir d'une similarité entre les coefficients cepstrum LPC et deux modèles normalisés par utilisation d'une mesure de distance statistique dans laquelle les coefficients cepstrum LPC sont des paramètres utilisés indicatifs de la forme du spectre du signal vocal d'entrée, et la mesure de distance statistique est utilisée comme une mesure de similarité, les deux modèles normalisés précités indicatifs de la forme d'un spectre moyen de son voisé et de son non voisé étant mémorisés à l'avance dans la partie de mémorisation de modèle normalisé.

12. Appareil selon la revendication 1, 4 ou 11, caractérisé en ce que la mesure de distance statistique est l'une des fonctions de discriminants de Baye, de discriminants de distance linéaire et de distance de Mahalanobis.

13. Appareil selon l'une quelconque des revendications 2 à 12, dans lequel les première (12) et seconde (18) parties de calcul de similarité sont réalisées de telle sorte qu'une portion de celles-ci est utilisée de façon courante.

FIG.1
INPUT SPEECH SIGNAL
10
LPC ANALYSIS
15
SEGMENTATION PARAMETER EXTRACTION
11
INPUT BUFFER
16
POWER INFO. BUFFER
12
SIMILARITY CALCULATION
13
VOWEL/NASAL SOUND/ VOICED SOUND FEATURE/ UNVOICED SOUND FEATURE STANDARD PATTERN STORAGE
14
SIMILARITY BUFFER
17
CONSONANT SEGMENTATION
21
VOWEL RECOGNITION
18
CONSONANT SIMILARITY CALCULATION
19
CONSONANT STANDARD PATTERN STORAGE
22
PHONEME STRINGS PRODUCTION
20
CONSONANT RECOGNITION
8
WORD COMPARISON/ MATCHING
9
WORD DICTIONARY
RESULTS OF WORD RECOGNITION

FIG. 2

INPUT SPEECH SIGNAL
A
DIVIDE SOUND PERIOD OF INPUT SPEECH INTO FRAMES j (j = 1. 2 ---- J)
B
PERFORM LPC ANALYSIS
PREEMPHASIS: DIFFERENCE OF 1st DEGREE
WINDOW CALCULATION: HAMMING WINDOW
LPC ANALYSIS: 15th DEGREE
LPC CEPSTRUM CALCULATION: 15th DEGREE
OBTAIN LPC CEPSTRUM COEFFICIENTS C1(j)...... C15(j)
C
CALCULATE VOWEL SIMILARITY USING 5 VOWEL/NASAL SOUND STD PATTERNS
OBTAIN SIMILARITY LVK(j)
FIND PHONEME a(j) CAUSING HIGHEST SIMILARITY AND FIND PHONE b(j) CAUSING SECOND HIGHEST SIMILARITY
WORD BEGINNING CONSONANT ?
NO
YES
M
SECOND METHOD OF WORD BEGINNING CONSONANT DETECTION TO DETERMINE CONSONANT PERIOD 1 TO IH2
D
CALCULATE BAND POWER TO OBTAIN PH(j) AND PH(j)
PH(j): HIGH-FREQ. RANG POWER
PL(j): LOW-FREQ. RANGE POWER
LP(j) = 10·log P(j)
LP(j) = (LP(j-1) + 2LP(j) + LP(j+1)) / 4
DP(j) = LP(j+1) - LP(j-1)
E
WORD BEGINNING CONSONANT ?
YES
NO
1
2
3
4
5
6
7

1
F
FIRST METHOD OF IN-WORD CONSONANT DETECTION
(DETERMINE PROPOSED CONSONANT PERIOD)
CALCULATE DIFFERENCE VALUES
$P_h = DP_H(j_2) - DP_H(j_1)$
$P_l = DP_L(j_2') - DP_L(j_1')$
$L_h = j_2 - j_1$
$L_l = j_2' - j_1'$
$P > P_{min},\ L < L_{max}$
G
DETERMINE CONSONANT PERIOD USING DISCRIMINANT DIAGRAM F
IF $F(P_l, P_h) = 0$, ABANDON
IF $F(P_l, P_h) = 1$, REGARD AS CONSONANT
DETERMINE CONSONANT PERIOD $IS_1$ TO $IE_1$
$IS_1 = min(j_1, j_1')$
$IE_1 = max(j_2, j_2')$
8
2
L
FIRST METHOD OF WORD BEGINNING CONSONANT DETECTION
$DP_h(j_3) \leftarrow$ MAXIMAL VALUE OF $DP_H$
$DP_l(j_3') \leftarrow$ MAXIMAL VALUE OF $DP_L$
$(n \leq j_3, j_3' < m)$
DETERMINE CONSONANT PERIOD 1 TO $IH_1$, WHERE
$IH_1 = max(j_3, j_3')$
7
10
O
DETERMINE PERIOD 1 TO IH USING AT LEAST ONE OF FIRST TO THIRD METHODS
9

3
I
CALCULATE VOICED SOUND FEATURE / UNVOICED SOUND FEATURE SIMILARITY
OBTAIN SIMILARITY LU$_K^{(j)}$
u$^{(j)}$ ← STANDARD PATTERN NAME CAUSING MAX. LU$_K^{(j)}$
WORD BEGINNING CONSONANT ?
NO
YES
J
THIRD METHOD OF IN-WORD CONSONANT DETECTION
[DETERMINE CONSONANT PERIOD IS3 TO IE3 IF u IS UNVOICED SOUND FEATURE IN FRAMES j1 TO j2 AND IF j2-j1 > 7, IS3 = j1, IE3 = j2]
N
THIRD METHOD OF WORD BEGINNING CONSONANT DETECTION
[DETERMINE CONSONANT PERIOD 1 TO IH3 (IH3 ≥ 4) IF 4 OR MORE SILENT FRAMES CONTINUE FROM WORD BEGINNING]
11
8
K
USE AT LEAST FIRST METHOD TO DETERMINE PERIOD IS TO IE, IS' TO IE', IS'' TO IE'' ....
9
10
DETERMINE CONSONANT PERIOD 1 TO IH. IS TO IE, IS' TO IE' .....
P
12

4
Q
CALCULATE CONSONANT SIMILARITY USING STANDARD PATTERNS OF CONSONANTS (K = 1, 2 ···· 29)
OBTAIN SIMILARITY $LC_K^{(j)}$
12
R
WORD BEGINNING CONSONANT PRESENT ?
NO
YES
DETERMINE PHONEME NAME CAUSING $\underset{K}{MAX} \cdot \sum_{j=1}^{IH} LC_K^{(j)}$ AS CONSONANT OF PERIOD 1 TO IH
IN-WORD CONSONANT PRESENT ?
NO
YES
DETERMINE PHONEME NAME CAUSING $\underset{K}{MAX} \cdot \sum_{j=IS}^{IE} LC_K^{(j)}$ AS CONSONANT OF PERIOD IS TO IE
13
6
H
SECOND METHOD OF IN-WORD CONSONANT DETECTION
(DETERMINE CONSONANT PERIOD $IS_2$ TO $IE_2$ IF $a^{(j)}$ OR $b^{(j)}$ IS N(NASAL SOUND) AND N CONTINUES FROM $j_1$ TO $j_2$, WHERE $j_2 - j_1 \geq 5$, $IS_2 = j_1$, $IE_2 = j_2$)
11

13
5
S
OBTAIN PERIODS BY REMOVING CONSONANT PERIODS FROM ENTIRE SOUND PERIOD (1 TO J)
$V_1^{(m)}$ TO $V_2^{(m)}$: OBTAINED PERIODS
(m = 1, 2, ..... M), M = NUMBER OF PERIODS
DETERMINE SEMIVOWEL PERIOD IF SEMIVOWEL PATTERN EXISTS IN PERIODS $V_1$ TO $V_2$ AND DETERMINE SEMIVOWEL NAME
IF PHONEME OF HIGHEST SIMILARITY CONTINUES FOR 4 OR MORE FRAMES IN PERIOD $V_1$ TO $V_2$ AND IF A PLURALITY OF SUCH CONTINUATIONS EXIST, EACH PERIOD $V_1$ TO $V_2$ IS DIVIDED INTO FRAMES AND DETERMINE RESPECTIVE PHONEMES
WHEN CONTINUATION IS OF LESS THAN 4 FRAMES, DETERMINE MOST PREDOMINANT VOWEL AS PHONEME OF PERIOD OBTAINED BY REMOVING SEMIVOWEL PERIOD FROM PERIOD $V_1$ TO $V_2$
T
PRODUCE PHONEME STRINGS BY ARRANGING RECOGNIZED PHONEMES WITHIN SOUND PERIOD
CORRECT PHONEME STRINGS USING JAPANESE PRONOUNCIATION RULE
USE WORD DICTIONARY FOR COMPARISON/MATCHING
RECOGNITION RESULTS OUTPUT

FIG. 3

VOWEL
CONSONANT
VOWEL
3a
3b
3c
P
L

FIG. 4

Ph
10
5
0
CONSONANT
ADDITION
5
10
15
Pl

# FIG. 5

FRAME NO. ---- 1 2 3 4 5 6 7 8 9 10 11 12 13 14 15 16 17 18 19 ....
HIGHEST SIMILARITY A A A A A O O O O O N N N U N N U U U
SECOND HIGHEST SIMILARITY -- E O O O O A A A N N O O U N U U N N N
PERIOD ------ VOWEL CONSONANT VOWEL
PHONEME ----- /a/ /o/ /u/

# FIG. 6

6a
6b
i
n
m
j3

# FIG. 7

| FRAME NO. | 1 | 2 | 3 | 4 | 5 | 6 | 7 | 8 | 9 |
|---|---|---|---|---|---|---|---|---|---|
| HIGHEST SIMILARITY PHONEME STRING | N | N | N | U | N | A | A | A | A |
| SECOND HIGHEST SIMILARITY PHONEME STRING | I | I | U | N | U | O | O | O | O |

WORD BEGINNING CONSONANT (frames 1–5)

FIG. 8

/n/
/o/
/h/
/a/
/r/
/a/
40
41
42
43
44
45
46
47

FIG.9

FIG.10

# FIG.11A

23
RRRJJJJJJJJJJ000000000··· 00
24
RRRR
25
UUIIIIIIEEUU00000000··· 00
PROPOSED SEMIVOWEL /j/ PERIOD
FOLLOWING VOWEL PERIOD
26
JJJJJJJJ

# FIG.11B

27
AAAAAAAAAAAWWWWWWWAAAAAAAAAAAAA
28
HHHHHHH
29
AAAAAAAAAAA0000000AAAAAAAAAAAA
PROPOSED SEMI-VOWEL /w/ PERIOD
70
WWWWWWWW

RESULTS OF RECOGNITION
8
WORD COMPARISON/ MATCHING
WORD DICTIONARY
9
22
PHONEME STRINGS PRODUCTION
21
VOWEL RECOGNITION
CONSONANT RECOGNITION
20
19
CONSONANT STANDARD PATTERN STORAGE
62
SIMILAR-ITY BUFFER
CONSONANT SEGMENTATION
17
80
VOWEL/NASAL SOUND/ VOICED SOUND FEATURE/ UNVOICED SOUND FEATURE STANDARD PATTERN STORAGE
13
61
SIMILARITY CALCULATION
POWER INFO. BUFFER
16
10
LPC ANALYSIS
SEGMENTATION PARAMETER EXTRACTION
15
INPUT SPEECH SIGNAL

FIG.12